# EUROPEAN PATENT SPECIFICATION

(11) **EP 3 219 852 B1**
(45) Date of publication and mention of the grant of the patent: **04.12.2019**
(21) Application number: 15858030.8
(22) Date of filing: 30.10.2015
(51) Int. Cl.: E01B 26/00, H05F 3/02, H02G 9/04

(54) **DESTATICIZING MEMBER TO BE MOUNTED ONTO A TROUGH FOR LAYING CABLES.**
ENTSTATISIERUNGSELEMENT ZUR MONTAGE AUF EINER KABELRINNE
ÉLÉMENT DE TRAITEMENT ANTISTATIQUE POUR MONTAGE SUR UN CONDUIT DE CÂBLES

(30) Priority: 05.11.2014 JP 2014225380
(43) Date of publication of application: 20.09.2017
(73) Proprietor: Furukawa Electric Co., Ltd., Chiyoda-ku Tokyo 100-8322 (JP)
(72) Inventor: WADA, Naoto, Tokyo 100-8322 (JP); KOZAWA, Satoshi, Tokyo 100-8322 (JP); HAGIWARA, Takuzo, Tokyo 100-8322 (JP)
(74) Representative: Goddar, Heinz J.
(86) International application number: PCT/JP2015/080809
(87) International publication number: WO 2016/072367

(56) References cited:
- WO-A1-94/21018
- DE-A1- 2 411 961
- DE-A1-102004 034 254
- JP-A- S6 162 309
- JP-A- 2007 282 482
- JP-A- 2012 131 190
- JP-U- 3 131 806
- JP-Y2- S5 548 044

## Description

### TECHNICAL FIELD OF THE INVENTION

This invention relates to a structure comprising a destaticizing member and a trough on which the destaticizing member is used to eliminate static electricity charged on a person walking on the trough, to a trough line, to a method for destaticizing static electricity, and to a destaticizing member used for the same.

### BACKGROUND OF THE INVENTION

Troughs for laying signal cables and the like are laid aside tracks such as railroad tracks. Troughs made of concrete have been used conventionally. However, due to heavy weight and mal workability of concrete-made troughs, lighter troughs made of recycled resin with less environmental burden have been in use.

A trough includes a body and a lid portion. The trough body has male and female fitting portions formed at its tip and rear ends, and the male portion and the female portion are fitted and joined together usually to form a trough line of predetermined length. Also, the lid is mounted on the trough body covering the same. Although there are various types of fixing methods, the lid is usually fixed to the trough body by using a fixing member.

On the other hand, trough lines in which troughs are joined in this way are often formed in relatively narrow spaces such as railroad sides and bridges. In such cases, workers for maintenance and constructions of the railroads or the like walk on the trough lines, which are relatively easy to walk on.

However, when the worker walks on the trough line, the troughs and the worker are charged with accumulated static electricity. Electrical charging is a phenomenon in which electric charges exchange over a contacting surface of two materials in contact with each other, in which the first one is positively charged and the second one is negatively charged. There are mainly three types of electrical charging: charging by contact, charging by friction, and charging by detachment. In particular, insulating materials easily generate static electricity, and thus troughs and shoe soles having insulation properties are easily accumulated with static electricity and become charged. Thus, when the worker walks on the trough line, both parties are charged by contact, friction, and detachment of the worker's shoes and the surface of the trough.

In particular, walking makes charging amount gradually increase on the surface of the worker's shoe due to repetitive contact, friction, and detachment with the trough surface. On the other hand, 60 to 65 % of an adult human body consists of water, which shows that the specific resistance of a human body is low and a human body can be considered as a conductor. Thus, the electric charges are induced to the human body by electrostatic induction.

Here, electrostatic induction is defined as: when an electrically charged body approaches a conductor, the electric charge of the opposite polarity to the polarity of the charged body are induced on the surface of the conductor, and the opposite charges to the induced charge are induced on the surface away from the charged body. In specific, when a person walks on a floor, electrostatic induction occurs due to friction between the shoes and the floor, as for example explained in WO 2006/011419 A1. Naturally, when the worker walks on the resin-made trough lids, static electricity is induced to the worker in the same way, and the electrostatically induced charges increase as the charging amount of the shoes increases due to an increase in walking distance.

When the worker, who is induced with electric charges by electrostatic induction and charged and accumulated with static electricity as above, touches another conductor such as a handrail, discharging between the worker and the object occurs. This discharge gives a shock to the worker, who feels the pain and may tumble over from losing balance in a narrow working space.

To prevent such charging to the workers, JP-A-2013-59412discloses charge-protect shoes in which resistance of the outer surface of the soles thereof is prescribed, for example. In JP-A-2013-59412, a member that makes the resistance 10⁴ Ω or less is attached to the soles, so, as a result, the charging voltage of the human body can be reduced to 50 V or less.

Also, there is a method to suppress charging by adding carbon, a low-molecular surfactant, a polymer surfactant, or a metal oxide to the recycled resin forming the trough so as to improve electrical conductivity of the trough.

Furthermore, there is a method of destaticizing by providing a destaticizing space aside the trough line, where a destaticizing mat or a destaticizing device is provided. For example, as a destaticizing mat, JP-A- H06-217859discloses a destaticizing mat including a porous high-strength sheet made of aramid fiber or the like and conductive short fiber that are made into a sheet together, in which pile textiles including the conductive fiber is woven into the high-strength discharging sheet with some of the conductive short fiber protruding from the surface of the sheet. Here, destaticizing is achieved when a human body or a shoe sole comes into contact with the destaticizing mat and the static electricity, which is charged to the human body, is discharged to the air through the conductive fiber in the pile textile and the high-strength discharging sheet.

Moreover, JP-A- H11-297490discloses a destaticizing sheet material for cars, which can be attached to a conductive part of a car with which a human body is likely to come into contact. This destaticizing sheet includes a destaticizing layer that, in contact with a conductor, eliminates its electric charges and an adhesion layer formed on one side of this destaticizing layer, and the surface resistivity of the destaticizing layer is in the range between 1×10⁹Ω and 9×10¹⁰Ω in an atmosphere at 15 °C with relative humidity of 30 %.

The surface resistivity of the destaticizing sheet is set in the range between 1×10⁹Ω and 9×10¹⁰Ω. This is because: if the surface resistivity is below the above range and a human body charged with static electricity touches a conductor such as a metal with his/her finger, the human body receives an electric shock from instantaneous discharging of the static electricity charged to the human body; if the resistivity exceeds the above range, the attenuation time of static electricity becomes longer and the static electricity charged to the human body is not destaticized sufficiently. Thus, it is described in JP-AH11-297490 that, to destaticize directly from a human body, it is necessary to set the surface resistivity of the destaticizing sheet in the predetermined range.

Finally, as a method for destaticizing directly from a human body, there is a method using a destaticizing device that eliminates electric charges that are charged to a human body by spraying ions into the air to neutralize electric charges charged to the human body.

DE 10 2004 034 254 A1 relates to a drainage channel for draining liquids from, for example, paved surfaces, in particular a drainage channel, which has at least one means for potential equalisation with its surroundings.

### SUMMARY OF THE INVENTION

### (PROBLEMS TO BE SOLVED BY THE INVENTION)

However, although JP-A-2013-59412examines material compositions of shoe soles and sets the electric potential of the bottom surface layer of the shoe sole in a predetermined range so as to alleviate the electric potential charged to a human body, the invention does not eliminate electric charges by destaticizing static electricity charged to the worker or the shoe soles.

Also, not much effect can be expected with a small amount of addition of the surfactant, which is added to resin in order to gain charging protection effects by improving conductivity of the trough. Also, since the charging protection effects from the surfactant are by effects of the surfactant bleeding out on the trough surface, the destaticizing effect is small and there are problems of stability and sustainability of the effect.

Charging protection effects can also be obtained by adding metal oxides such as TiO₂, ZnO, or SnO₂. However, small amount of addition is ineffective, and large amount of addition leads to deterioration of impact durability and an increase in cost. Also, when the surfactant or the metal oxide is used as the charging protection agent, the electric resistance of the surface of the trough can be decreased, but it is impossible to completely prevent the trough or the worker from getting charged.

Also, in the case of providing a destaticizing space aside a trough line, in which a destaticizing sheet or mat is provided, its installation site is limited and destaticizing cannot be done until the worker moves to the site. Thus, it is risky because the worker may come into contact with a conductor and get an electrical shock before reaching the site. Furthermore, it is required to ensure an installation site for the destaticizing sheet or mat and its installation cost may be expensive. Also, when workers walk on such a destaticizing mat, which is installed outdoors, the fiber of the destaticizing mat may fall out or soil or sand may attach and deposit on the surface or the interior of the destaticizing mat, leading to a problem of deterioration of destaticizing performance.

The invention according to JP-A- H11-297490has problems of complicated resin composition and mal manufacturability, and, furthermore, transparent vinyl chloride resin is used so that the adhesive agent of the lower layer may degrade due to ultraviolet rays or change in environmental temperature. Also, this invention is often used in the interior of the metal parts in a car body and thus the upper limit of the thickness of the sheet is thin. Thus, the invention has a problem of lacking in durability to be installed on an upper surface of the trough lid over which workers walk. There is also a problem of disposal after use since vinyl chloride resin is used.

The method in which the destaticizing device is used requires a specialized space for destaticizing, which is provided with a space for installing the destaticizing device, equipment for surrounding the destaticizing space, and a power source for the device for generating ions. It is impossible to install all these on the troughs, and there is also a possibility that the worker receives electrical shock before reaching the destaticizing space as mentioned above.

The present invention was achieved in view of such problems. Its object is to provide a structure to mount a destaticizing member to a trough, in which conventional troughs can be used intact without obstructing walkers' walks and static electricity charged to a worker can be easily eliminated, a method for destaticizing static electricity from the worker walking on a trough line, in which destaticizing is possible by simply walking and stopping on a surface of the trough lid, and a destaticizing member for troughs used for the same.

### (MEANS FOR SOLVING PROBLEMS)

The invention is defined by the subject matter of the independent claims. Advantageous embodiments are subject to the dependent claims.

A first embodiment of the invention provides a structure that comprises a trough for laying cables.. The trough includes a trough body and a trough lid, which is disposed over the trough body and is made of resin. The structure further comprises a destaticizing member includes a conductor member and a metal-made conductive member, which has a connection portion to be connected with the conductor member. A first end of the conductive member is connected to the connection portion and a second end of the conductive member is connected to an earth portion. The metal-made conductive member includes a top plate portion and a pair of leg portions that are connected to both ends of the top plate portion. The top plate portion is disposed so as to cover an upper surface of the trough lid in its width direction. The pair of the leg portions interpose and hold the trough body, and the metal-made conductive member is fixed to the trough body. A linear conductor such as a lead wire or a metal-made chain member can be used as the conductor member.

A convex portion protruding above the upper surface of the trough lid may be formed at the center of the top plate potion, and a gap may be created between the convex portion and the trough lid. Here, the overall convex portion is preferably formed from the ends of the top plate portion in a smooth curve.

The leg portions are formed in a direction opposite to the trough lid. When a walker steps onto the top plate portion, the convex portion sinks, which increases an area of contact between the top plate portion and the walker's shoe soles, and thus the destaticizing performance can be improved. The convex portion is formed with a smooth curve as a whole, and with bead processing or emboss processing in addition, the rigidity of the top plate portion can be improved and the worker can be prevented from slipping on the top plate portion when stepping onto the top plate portion.

Preferably, protruding portions that protrude from a base portion are formed on the upper surface of the trough lid, and the top plate portion is disposed between upper surfaces of the protruding portions and an upper surface of the base portion. Since the top plate portion does not protrude above tips of the protruding portions, it is still easy for the worker to walk on the top plate portion of the metal-made conductive member of the destaticizing member.

A fixing portion to be fixed to the trough body is provided on the leg portion and the fixing portion has a locking claw, which is formed at a lower end portion of the leg portion. Preferably, the locking claws interpose and hold the side faces of the trough body so that the metal-made conductive member is fixed to the trough body.

Preferably, the metal-made conductive member includes a structure as a fixing member for fixing the trough lid to the trough body, and the destaticizing member can be mounted on the same position as the fixing position of the trough lid to the trough body.

According to the first embodiment of the invention, static electricity charged to a worker in walking on resin-made trough lids of a trough line can be eliminated by continuing walking on the trough lids and stepping onto the destaticizing members as necessary. Thus, even if the worker walks for a long walking distance, destaticizing can be done by repeatedly charging and destaticizing for a number of times during the walk. Thus, there is no need to provide a destaticizing space or a destaticizing member separate from the trough line and to stop thereby. Furthermore, since the metal-made conductive member is used for the top plate, destaticizing is possible without making the destaticizing member contact with the whole surface of a shoe sole or without having much larger contacting area with the destaticizing object as in a destaticizing mat.

Also, since the power collecting plate of the destaticizing member covers and wraps the upper surface of the trough lid crossing in its width direction, the worker will never fail to step on to the power collecting plate and can be destaticized with certainty. Also, the top plate portion is in a substantially rectangular shape having the width thereof larger than the trough width and the length thereof that is predetermined. Thus, the contact area between the shoe sole and the top plate portion is unchanged whichever position of the top plate portion in the width direction the worker steps onto, so that stable destaticizing can be done with the substantially constant contact area.

Also, mounting of the destaticizing member to the trough is easy and thus application to conventional troughs is possible. Also, for example, the connection portion of the lead wire as a conductor member is on the leg portion, which does not obstruct walking of the workers. Mounting the destaticizing member is easy since the destaticizing member covers the upper surface of the trough lid in the width direction and is fixed to the tough body or the trough lid by the locking portions at the tips of the bent portions.

Also, the top plate portion as the power collecting plate of the destaticizing member is disposed on the upper surface of the base portion of the trough lid on a cross section in the width direction, which is perpendicular to the longitudinal direction of the trough, and, furthermore, is positioned between the upper surface of the protruded portions and the upper surface of the base portions. Thus, the top plate portion does not protrude above the tips of the protruding portions and the workers do not stumble over the top plate portion of the metal-made conductive member of the destaticizing member. Also, even if the worker kicks the top plate portion while walking, the top plate portion is disposed beneath the upper surface of the protrusion portion on the upper surface of the base portion so the top plate portion does not move in the longitudinal direction of the trough lid.

Also, the metal-made conductive member is formed by folding a band-shaped metal piece so as to form the top plate portion and the leg portions in one body, and forming the slightly swelling convex portion at the center of the top plate portion can create a gap between the trough lid and the top plate portion. Thus, when the walker steps onto the top plate portion, the convex portion sinks and transforms so that the contact area between the top plate portion and the walker's shoe sole can be increased.

In this way, the contact area between the power collecting plate and the shoe sole increases and thus static electricity charged to the shoe sole can be smoothly eliminated from the power collecting plate. Here, since the shoe sole is an insulator, the electric charges on the surface of the shoe sole itself does not easily move and thus it is extremely important to increase the contact area in destaticizing. Also, by providing the convex portion on the top plate portion as above, a restoring force is applied to the sunk top plate portion at the contacting portion of the shoe sole and the top plate portion, and this increases not only the contact area in appearance but also increases the contact pressure, resulting in an effect of increasing in micro contact area.

Also, by forming the locking claw at the lower end portion of the leg portion and fixing the locking claw to the locking portion formed on the side face of the trough body, the metal-made conductive member can be mounted on and fixed to the trough easily. When the metal-made conductive member is fixed to the trough body using the locking claws, the metal-made conductive member can be fixed by using only the locking claws. However, any of the other methods than locking claws, such as fixing by bolts, may be used for fixing the metal-made conductive member to the trough body. For example, the locking claws may be formed by folding the tip ends of the leg portions of the band-shaped metal piece.

Also, if the metal-made conductive member includes a structure as a fixing member of the trough lid and the trough body, the trough lid can be fixed to the trough body by using the fixing portions of the destaticizing member instead of using the fixing member for the trough lid.

Another second embodiment relates to a trough line that is formed by joining structures of the first embodiment. This may be achieved by joining their trough bodies together as well as by joining their trough lids together. In this trough line, a relationship between a worker's walking distance and charged voltage is found, an assumption of a charging amount based on this result is calculated, and then a fixing position to meet this charging amount is determined so that the structure to mount the destaticizing member to the trough according to the first embodiment is provided at the fixing position (the fixing portion) of the trough lid at the predetermined position of the trough line.

Here, the amount of charge charged by static induction caused by the worker walking on the resin-made trough lid of the trough line varies greatly depending on the layout environment of the trough, season, or individual workers. However, the most influential factor is humidity. Thus, the position or the mounting intervals for the destaticizing member to be provided on the trough line should be preferably determined on the basis of the amount of charge in winter season when the amount of charge in the trough line is considered to be the maximum.

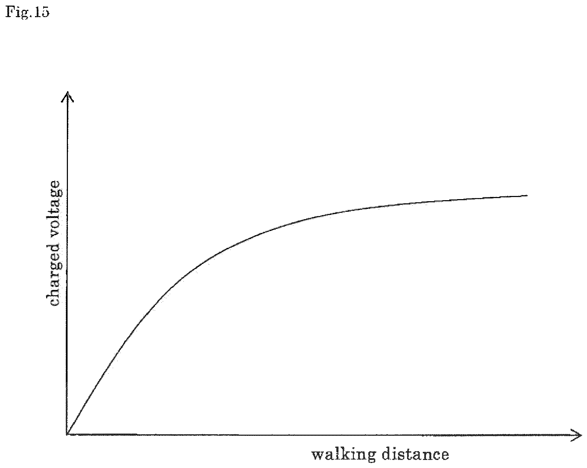

Here, FIG. 15 shows a relationship between dimensionless walking distance and charged voltage. The charged voltage of the worker walking on a surface of the resin-made trough lid increases sharply as the walking distance increases. After that, the charged voltage tends to gradually saturate as the walking distance increases. In this saturated region, the amount of increase in the charged voltage tends to decrease as the walking distance increases. The walking distance for the worker to reach this region of saturated charged voltage is usually between several hundred meters to 1 km, with the charged voltage greater than 5 kV. Thus, to reduce the risk of the walker charged by static induction of receiving electric shock from touching a conductor or the like, it is preferable to get destaticized in the region in which the charged voltage is smaller. The walking distance of the worker in this case is, for example, 50 to 100 m.

Also, in this case, there may be a case in which a difference of less than one trough length (about 1 m) arises between the mounting position of the destaticizing member and the predetermined walking distance of the worker. However, the change in the charged voltage in this case is not too large and it is not a problem to set the mounting intervals for the destaticizing members to eliminate static electricity of the worker walking on the surface of the resin-made trough lids.

Thus, to reduce the risk of the worker of receiving electric shock from touching a conductor or the like, for example, the mounting intervals of a plurality of the destaticizing members can be freely set to an integral multiple of the trough length or, alternatively, within the range of the integral multiple of the trough length with the difference of less than one trough length, according to the mounting environment of the destaticizing members and the worker's charge amount. In this case, it is preferable to set the destaticizing intervals according to the setting conditions for the charged voltage of 3 kV for example, which is the standard lower limit of the worker's charged voltage from which the worker feels electric shock.

The trough lid may be fixed at any positions as long as the trough lid can be fixed to the trough body. Usually, the trough lids are often used with their both ends in the longitudinal direction thereof overlapping with each other so as to absorb thermal expansion or contraction and prevent entry of foreign substances from the outside of the troughs. Thus, in some cases, the lids formed with a lower thin-layered portion on one end thereof and an upper thin-layered portion on the other end in the longitudinal direction and provided with the fixing portion at the lower or upper thin-layered portion or in the proximity thereof may be used.

Here, in the trough line that is formed by joining trough bodies together as well as joining trough lids together, the trough lid may include the lower thin-layered portion at one end of the longitudinal direction and the upper thin-layered portion at the other end, and for the adjacent trough lids, the upper thin-layered portion of the first trough lid overlaps the lower thin-layered portion of the second trough lid. The destaticizing member may be disposed on the overlapping position of the upper and the lower thin-layered portions or in the proximity of the upper thin-layered portion and fix the first trough lid with the second trough lid.

A fixing member, which is formed from only the metal-made conductive member, may be used to fix the trough lid to the trough body at the fixing position of the trough body and the trough lid other than the position provided with the destaticizing member in the trough line.

According to the second embodiment of the invention, since the destaticizing member is mounted on the trough line to counterbalance the worker's charge amount, the worker's charge amount can be reduced to the predetermined value or less. In the trough line that is formed by joining trough bodies together as well as joining trough lids together, the relationship between the worker's walking distance and the charged voltage is found, an assumption of the charging amount according to the worker's walking distance based on this result is calculated, and then the fixing position of the destaticizing member to the trough lid in the trough line can be determined to meet this charging amount.

For example, a worker who shows the highest raise in the charged voltage among the walkers after walking for a particular distance is selected, this worker's charged voltage during the walk is measured, the walking distance at which the worker acquires the predetermined charged voltage is found and then the charged voltage can be set below the predetermined value. Alternatively, the charged voltages of a plurality of workers after walking for the predetermined walking distance may be measured so that the average of these charged voltages can be used. Measuring the walking distance of the worker at this point can determine the distance that counterbalance the assumed charged voltage.

Also, the destaticizing member can be arranged easily at predetermined intervals by providing a plurality of the structures to mount the destaticizing member to the trough either at positions each of which are apart from one another with freely selected intervals of an integral multiple of the length of the trough body, or at positions that are away from the positions each of which are apart from one another with freely selected intervals of an integral multiple of the length of the trough body for the distance between the fixing positions of the trough lid.

Also, by using the trough lid formed with the lower thin-layered portion at one end thereof and the upper thin-layered portion at the other end in the longitudinal direction, overlapping the upper and the lower thin-layered portions of the adjacent trough lids with each other, and fixing the destaticizing member at the overlapping position or in the proximity thereof, the proximity of the both ends of the adjacent trough lids overlapping with each other can be fixed at the same time and thus the trough lids can be effectively fixed.

Also, it is possible to make use of the conventionally used fixing member by using the fixing member including only the metal band piece as a metal-made conductive member at the fixing positions of the trough body and the trough lid other than the positions provided with the destaticizing member.

Also, if swapping of the mounting positions between the fixing member of the trough body and the trough lid and the destaticizing member is possible, the arrangement of the destaticizing member can be easily changed according to the circumstances. For this purpose, the structures of the mounting portions of the destaticizing member and the fixing member to the trough lid should be the same.

A third embodiment is a method for eliminating static electricity using the structure to mount the destaticizing member to the trough according to the first embodiment, in which the conductor member is a lead wire or a chain member. The destaticizing member fixes the trough lid to the trough body and, at the same time, static electricity collected by the top plate portion of the destaticizing member is discharged to the earth portion through the lead wire or the chain member.

The conductor member may be a chain member and the static electricity collected by the top plate portion of the destaticizing member may be discharged to the earth portion through the chain member.

Preferably, a bolt is welded to the leg portion of the metal-made conductive member and one end of the lead wire or the chain member is connected to the bolt by fixing a nut to the bolt. The other end of the lead wire or the chain member is preferably connected to the earth portion.

Here, the chain member can also be fixed to the bolt by using the nut like the lead wire. Also, a metal-made chain member can be used instead of the lead wire and the static electricity collected by the top plate portion of the destaticizing member can be discharged to the earth portion through the chain member.

Also, the conductor member may be a lead wire, and one end of the lead wire may be connected to an elastic clip, which interposes and holds a part of the leg portion, while the other end of the lead wire may be connected to the earth portion.

Alternatively, the conductor member may be a lead wire, and one end of the lead wire may be connected to a connector, which is fixed to the leg portion, while the other end of the lead wire may be connected to the earth portion.

It is preferable that swapping of the mounting positions between the fixing member for the trough body and the trough lid and the destaticizing member is possible. To allow swapping of the mounting positions in this way, the length of the lead wire requires a margin of about one trough length.

The earth portion may be either a concrete anchor bolt, a metal structure, or underground, and the leg portion and the earth portion may be electrically connected by the lead wire or the chain member. If there is some distance to the earth portion, the lead wire or the chain member is wired along the side face of the trough and thus enough working space can be secured and there should be no obstacle in working around the destaticizing member. Also, the lead wire or the chain member is not wired inside the trough. Thus, the lead wire of the destaticizing member may not be a hindrance in replacing the destaticizing member or in installing or removing the cables inside the trough.

It is preferable that the destaticizing member is provided on the upper surface of the trough lid on the resin-made trough line and the static electricity charged to the worker due to static induction is eliminated when the worker walking on the trough line steps onto the top plate portion of the destaticizing member.

It is further preferable that a plurality of the destaticizing members are provided at intervals of 100 m or less, or 50 m or less, on the resin-made trough line, and the static electricity charged to the worker due to static induction is eliminated repeatedly every time the worker walking on the trough line steps onto the top plate portion of the destaticizing member.

Preferably, the mounting distance between the plurality of the destaticizing members provided on the trough line is equivalent to either at positions each of which are apart from one another with freely selected intervals of an integral multiple of the length of the trough body, or at positions that are away from the positions each of which are apart from one another with freely selected intervals of an integral multiple of the length of the trough body for the distance between the fixing positions of the trough lid.

Also, the mounting distance between the destaticizing members provided on the trough line is preferably determined by finding the relationship between the walking distance of the worker and the charged voltage and by calculating the assumption of the charged voltage corresponding to the worker's walking distance based on this result.

According to the third embodiment, destaticizing of the worker can be done with certainty only by stepping on the destaticizing members that are disposed at the predetermined intervals while walking on the trough line. Also, the static electricity charged to the worker's shoe sole is eliminated so that the static electricity induced and charged to the human body due to static induction can be decreased and easily destaticized. Also, by providing a plurality of the destaticizing members on the resin-made trough line at the predetermined intervals, the electrical charges charged to the worker walking on the trough line can be repeatedly eliminated and the accumulated charge amount charged to the worker can be decreased.

Also, welding the bolt to the leg portion and connecting the lead wire or the chain member using the nut facilitate to connect the lead wire or the chain member. Also, the clip may be attached to the leg portion, or the leg portion can be molded into Ω shape through which the lead wire can be inserted.

Also, if the structure allows the destaticizing member and the fixing member to swap with each other, the arrangement of the destaticizing member can be easily changed according to the circumstances.

Also, connecting the lead wire or the chain member directly to the concrete anchor bolt, a metal structure, or underground can make sure the destaticizing.

In the above method for destaticizing, a plurality of the destaticizing members are provided on the resin-made trough line at the predetermined intervals and the electric charges charged to the worker walking on the trough line due to static induction can be eliminated repeatedly by stepping onto the top plate portions of the destaticizing members. Also, the mounting distance between the plurality of the destaticizing members provided on the trough line can be equivalent to either at positions each of which are apart from one another with freely selected intervals of an integral multiple of the length of the trough body, or at positions that are away from the positions each of which are apart from one another with freely selected intervals of an integral multiple of the length of the trough body for the distance between the fixing positions of the trough lid. For example, the mounting distance between the destaticizing members provided on the trough line can be determined by finding the relationship between the walking distance of the worker and the charged voltage and by calculating the assumption of the charged voltage corresponding to the worker's walking distance based on this result. As above, the destaticizing members can be mounted at more reasonable intervals.

This method for destaticizing indirectly destaticize the human body by eliminating the electrical charges on the shoe sole, not by directly eliminating the electrical charges charged to the human body. Thus, when the electrical charges on the shoe sole are discharged to or absorbed by the metal plate in destaticizing, the charged voltage can be decreased without directly discharging the electrical charges from the human body, and thus the worker does not receive an electrical shock in destaticizing.

A fourth embodiment provides a destaticizing member to be mounted onto a trough. The destaticizing member includes a lead wire and a metal-made conductive member having a connection portion with the conductor member. The connection portion is connected to one end of the conductor member and the other end of the conductor member is connected to an earth portion. The metal-made conductive member includes a top plate portion and a pair of leg portions that interpose and hold the trough body. The leg portions are joined to both ends of the top plate portion and formed by bending an elastic metal band piece. The leg portions, which are bent with a sharp angle to the top plate portion, open to interpose and hold the trough side faces so that pressing force can be applied to the trough side faces.

Another fifth embodiment provides a destaticizing member to be mounted onto a trough in which the destaticizing member includes a conductor member and a metal-made conductive member having a connection portion with the conductor member. The connection portion is connected to one end of the conductor member and the other end of the conductor member is connected to an earth portion. The metal-made conductive member includes a top plate portion and a pair of leg portions that interpose and hold the trough body. The leg portions are joined to both ends of the top plate portion and formed by bending an elastic metal band piece. Fixing portions that are bent inwardly are formed at both sides of the leg portions. Holes are formed in the proximity of the both ends of the top plate portion and on the fixing portions of both sides of the leg portions. The hole in the proximity of both ends of the top plate portion and the hole of the fixing portion on either side of the leg portion are arranged in parallel so as to face with each other.

The destaticizing member according to the fourth and fifth embodiment has elasticity and can be easily mounted onto the trough. Also, the destaticizing member not only excels in destaticizing performance, but also excels in durability because a high strength metal material such as stainless that excels in corrosion resistance is used. Also, in comparison to a destaticizing mat using synthetic resin fiber, destaticizing performance is not impaired since clogging among the fibers do not occur with excellent dirt protection. Here, this destaticizing member, which is made of a high strength metal material, does not break when hit by working tools or the like. The destaticizing member has locking claws formed on the lower sides of the leg portions and can be easily fixed to the locking portions of the trough body. Also, if the top plate portion of the destaticizing member is processed to form rough surface, this can prevent the workers from skidding when stepping on the top plate portion.

Also, inserting a bolt from one of the holes provided in proximity of both ends of the top plate portion and fixing the bolt using a nut at the hole provided on either side of the leg portions can fix the metal-made conductive member.

### (EFFECTS OF THE INVENTION)

The present invention can provide a structure to mount a destaticizing member to a trough, in which conventional troughs can be used intact without obstructing walkers' walks and static electricity charged to a worker can be easily eliminated.

### BRIEF DESCRIPTION OF DRAWINGS

FIG. 1 is an exploded perspective view of a destaticizing member 1.
FIG. 2 is an exploded perspective view of a structure to mount a destaticizing member to a trough 30.
FIG. 3 is an assembled perspective view of the structure to mount the destaticizing member to the trough 30.
FIG. 4 is an enlarged side view of a vicinity of the destaticizing member 1 of the structure to mount the destaticizing member to the trough 30.
FIG. 5 (a) is an enlarged view of B-B line section in FIG. 4,
FIG. 5 (b) is a drawing showing another embodiment of FIG. 5 (a).
FIG. 6 (a) is a drawing showing another embodiment of FIG. 5 (a).
FIG. 6 (b) is an enlarged view of E portion in FIG. 6 (a).
FIG. 7 is a drawing showing a trough line 40.
FIG. 8 is a partial cross sectional view of C section in FIG. 7.
FIG. 9 (a) is a perspective view of a destaticizing member 1a.
FIG. 9 (b) is a perspective view of a destaticizing member 1b.
FIG. 10 is a perspective view of a destaticizing member 1c using a clip for connection.
FIG. 11 is a perspective view of a destaticizing member 1d using a connector for connection.
FIG. 12 is a perspective view of a destaticizing member 1e.
FIG. 13 is a partial cross sectional view showing a structure to mount the destaticizing member 1e.
FIG. 14 is a drawing showing another embodiment of the structure to mount the destaticizing member 1.
FIG. 15 is a graph showing a relationship between worker's walking distance and an increase in the charged voltage.

### DESCRIPTION OF SOME EMBODIMENTS

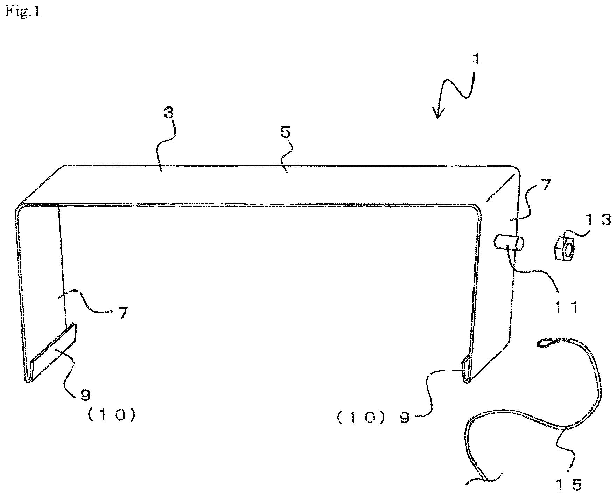

Hereinafter, a destaticizing member 1 according to an embodiment of the present invention will be described. FIG. 1 is an exploded perspective view showing the destaticizing member 1 that is to be mounted onto a trough. The destaticizing member 1 mainly includes a metal band piece 3, a bolt 11, a nut 13, a lead wire 15, and so on.

The metal band piece 3, which is a metal-made conductive member, includes a top plate portion 5 and leg portions 7. The metal band piece 3 is formed in one piece by bending a tabular metal plate: both ends of the top plate portion 5 are bent at substantially right angles to the top plate portion 5 (at a slightly acute angle - less than 90 degrees - to the top plate portion 5 in the drawing) to form a pair of leg portions 7. That is, the metal band piece 3 is in a substantially U shape and the pair of the leg portions 7 are joined to the both ends of the top plate portion.

The bolt 11 is welded to one of the leg portions 7. The bolt 11 may be a bolt with a head. The lead wire 15 is connected to the bolt 11 and the nut 13 fixes the lead wire 15 to the leg portion 7. That is, the bolt 11 is a connecting portion for the conductor member, and the metal banc piece 3 includes the lead wire 15, which is the conductor member, and the connecting portion for the lead wire 15. The method for fixing the lead wire 15 is not limited to the example shown in the drawing as long as the lead wire 15 can be fixed to the leg portion 7. Fixing by clip or connector connection may also be used.

A fixing portion 9 for to be fixed to a trough body is formed on each lower end of the leg portions 7. A locking claw 10 is formed at the fixing portion 9. The locking claw 10 is formed by folding the end of the leg portion 7 inward. The fixing portion 9 is a part that is to be fixed to a locking portion formed on the trough body. The trough body and the like will be described in detail later.

The metal band piece 3 is used being fixed to the trough body and a trough lid (hereinafter, a set of a trough body and a lid may be simply called as a trough). More specifically, the metal band piece 3 is mounted on the trough by opening the lower ends of the leg portions 7 and interposing the side faces of the trough body with the pair of the leg portions 7 to be fixed to the trough. That is, the locking claws 10 interpose and hold the side faces of the trough body so that the metal-made conductive member is fixed to the trough body. For this reason, the metal band piece 3 (the top plate portion 5 and the leg portions 7) is required to have elasticity and a corrosion resistant property for fixing the trough lids and the like.

Use of stainless or plated sheet steel, for example, for the metal band piece 3 can improve the durability of the destaticizing member so that the destaticizing member can be used for a long time even under the conditions of being exposed to the outdoor weather. In specific, SUS304 or the like may be used. Also, to improve elasticity of the corner portion between the top plate portion 5 and the leg portion 7, ribs or the like may be formed at the corner portion. In the present invention, the width direction and the longitudinal direction of the metal band piece 3 correspond to the width direction and the longitudinal direction of the trough, respectively. Here, the length of the metal band piece is in a range of 30 mm and 50 mm, which should be enough to gain sufficient destaticizing performance.

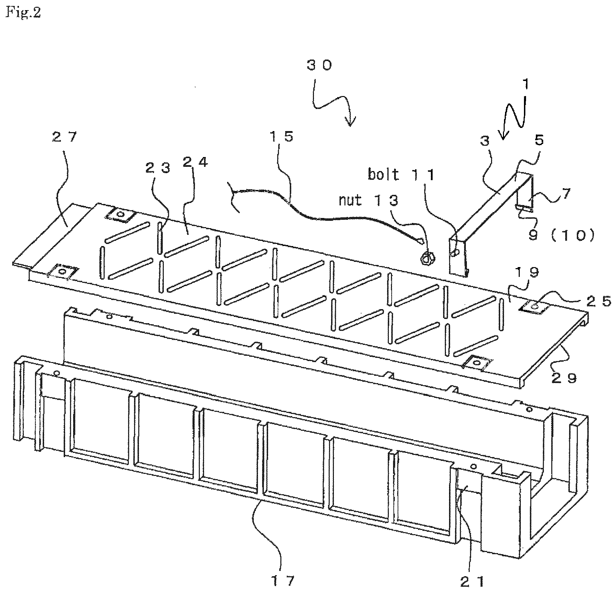

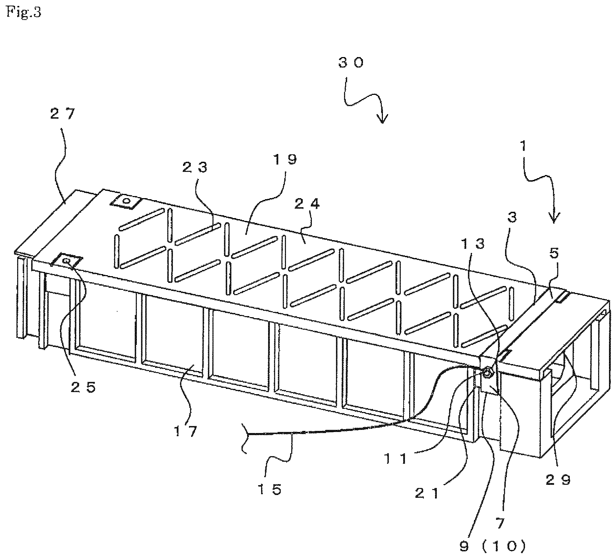

Next, a structure to mount the destaticizing member 1 to the trough will be described. FIG. 2 is an exploded perspective view of a structure to mount a destaticizing member to a trough 30 and FIG. 3 is an assembled perspective view of the structure to mount the destaticizing member to the trough 30.

The trough mainly includes a trough body 17 and a trough lid 19. The trough body 17 and the trough lid 19 are made of resin, though recycled resin for example may be used for making the same. The trough body 17 and the trough lid 19 are one meter long, for example. On either ends of the trough body 17 in the longitudinal direction, a male fitting portion and a female fitting portion are provided, respectively. The adjacent trough bodies 17 can be joined together by fitting the male fitting portion of the first trough body 17 with the female fitting portion of the second trough body 17.

The trough lid 19 is put over the trough body 17. A lower thin-layered portion 27 is formed at one end of the trough lid 19 in the longitudinal direction. The lower thin-layered portion 27 is a part that is thinner than the other parts and has a level difference on the side of its upper surface. An upper thin-layered portion 29 is formed at the other end of the trough lid 19 in the longitudinal direction. The upper thin-layered portion 29 is a part that is thinner than the other parts and has a level difference on the side of its lower surface (not shown). When joining the troughs together in the longitudinal direction, the upper thin-layered portion 29 of the first trough lid 19 of the adjacent trough lids 19 overlaps over the lower thin-layered portion 27 of the second trough lid 19. The joined section of the trough lids 19 will be described in detail later.

Protruding portions 23 are formed on the upper surface of the trough lid 19 for nonskid purpose and the like. In the descriptions below, the upper surface of the trough lid 19 excluding the protruding portions 23 will be considered as a base portion 24. The protruding portions 23 also function as a rib and contribute to improve the strength of the trough lid 19. The shapes of the protruding portions 23 are not limited to the example shown in the drawing.

The trough lid 19 is fixed to the trough body 17 by using a fixing member. For fixing the trough lid 19, a member that is in a shape substantially similar to the metal band piece 3 can be used. That is, a member having a top plate portion and a pair of leg portions can be used. Furthermore, a metal member with locking portions formed at the lower ends of the leg portions (a member formed only with the metal band piece 3 of the destaticizing member 1) can be used.

Alternatively, a bolt and a nut, for example, can be used as a fixing member for fixing the trough lid 19. In this case, holes 25 formed on the trough lid 19 are used. Alternatively, a buckle-type fixing member, which fixes the trough lid 19 from above after mounting the metal band piece, can also be used. In the descriptions below, a case in which the destaticizing member 1 (the metal band piece 3) is used also as a fixing member will be described, though both a fixing member and the destaticizing member 1 may be used together.

The destaticizing member 1 is mounted, for example, on a fixing portion of the trough body 17 and the trough lid 19 (the part to which the fixing member should be originally mounted). At the fixing portion of the trough body 17 and the trough lid 19, locking portions 21 are provided on outer side faces of the trough body 17. The locking portions 21 are protruding portions that are formed on the outer side faces of the trough body 17.

The metal band piece 3 is fitted from the upper part of the trough lid 19 into the trough to be mounted and the locking claws 10 at the lower ends of the leg portions 7 are fixed to the locking portions 21 so that the metal band piece 3 is fixed to the trough. At this point, the pair of the leg portions 7 of the metal band piece 3 interpose and hold the side faces of the trough body 17 and the trough lid 19 so that the metal band piece 3 is fixed to the trough.

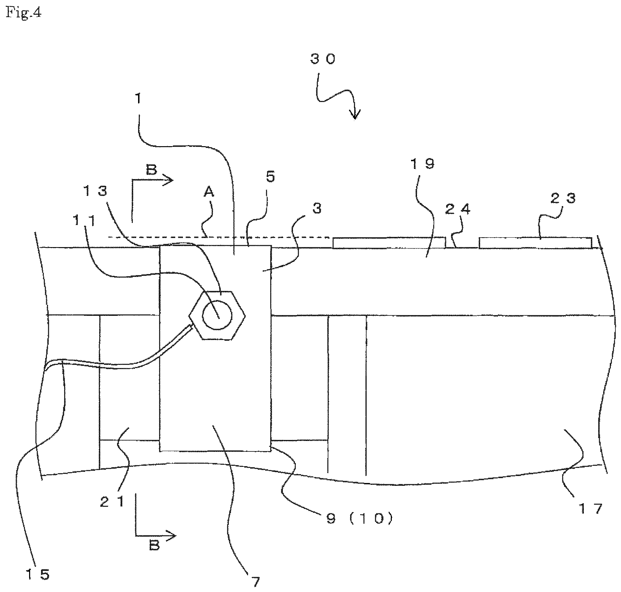

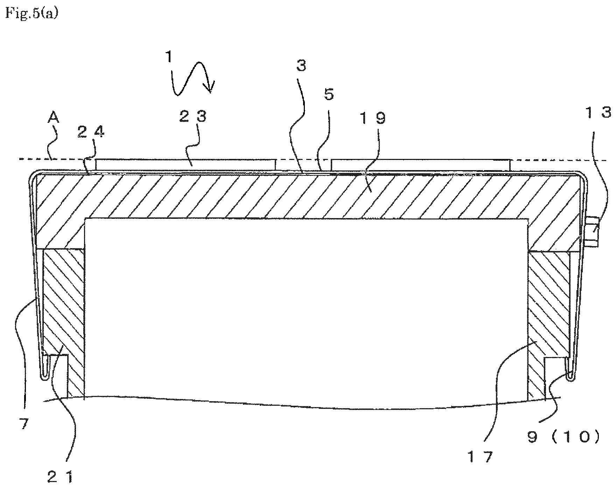

FIG. 4 is an enlarged side view of a vicinity of the part where the destaticizing member 1 is mounted and FIG. 5 (a) is a cross sectional view taken along B-B line in FIG. 4. As mentioned above, the protruding portions 23 are formed on the upper surface of the base portion 24 of the trough lid 19.

As shown in FIG. 5 (a), the top plate portion 5 of the metal band piece 3 is disposed covering the upper surface of the trough lid 19 in the width direction. Also, on a cross section perpendicular to the longitudinal direction of the trough lid 19, the top plate portion 5 of the metal band piece 3 does not protrude above the plane formed by connecting the tips of the protruding portions on the upper surface of the trough lid 19 (the upper surfaces of the protruding portions 23, which is shown as line A in the drawing). That is, with the metal band piece 3 mounted onto the trough, the top plate portion 5 of the metal band piece 3 is disposed on the upper surface of the base portion 24 of the trough lid 19 and is positioned between the upper surfaces of the protruding portions 23 and the upper surface of the base portion 24. Thus, the worker does not tumble at the metal band piece 3 when walking on the trough.

Here, the plane formed by connecting the tips of the protruding portions on the upper surface of the trough lid 19 on a cross section perpendicular to the longitudinal direction thereof is a plane obtained by connecting tip ends of protruding portions such as the protruding portions 23. That is, this plane is a plane obtained by connecting the tip ends of the protruding portions 23 such as nonskid protrusions and/or ribs for reinforcement that are provided on the upper surface of the trough lid 19 in many cases as mentioned above. The upper surface of the trough lid 19 is not necessarily in a straight line and may be in any shape as long as the shape of the plane formed by connecting the tip ends of the protruding portions 23 on the upper surface of the trough lid 19 is reflected. In either case, in order to ensure safe walking for the workers, it is required that the top plate portion does not protrude above this plane.

Although an example in which the top plate portion 5 of the metal band piece 3 is flat is described in the example shown in FIG. 5 (a), the present invention is not limited thereto. For example, as mentioned above, in a case in which the pair of the leg portions 7 are formed so as to approach with each other toward the lower ends thereof, the lower ends of the leg portions 7 of the metal band piece 3 are pushed outward and expanded when the metal band piece 3 is mounted on the trough. That is, when the leg portions 7 interpose and hold the trough sidewalls, the leg portions open so as to apply pressure force onto the trough sidewalls. Consequently, when the metal band piece 3 is mounted onto the trough, there may be a case in which a bending deformation is given to the proximity of the corner parts between the top plate portion 5 and the leg portions 7 from the end parts of the leg portions 7 to the end parts of the top plate portion 5, and this may cause the top plate portion to warp upward. Also in this case, it is preferable that the entire top plate portion 5 of the metal band piece 3 is positioned between the upper surface of the trough lid 19 (the upper surface excluding the protruding portions 23) and the upper surfaces of the protruding portions 23.

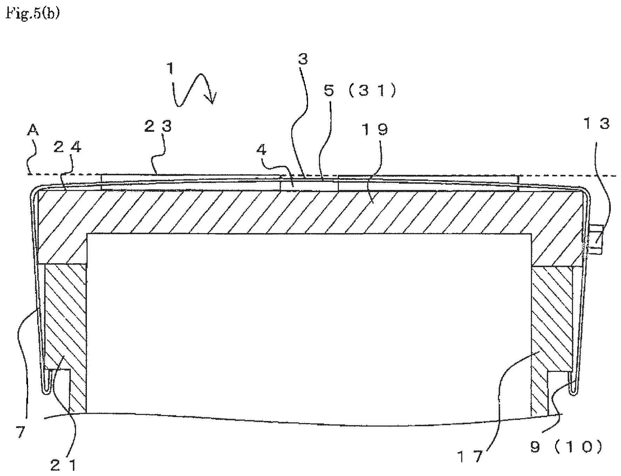

Also, as shown in FIG. 5 (b), the top plate portion 5 of the metal band piece 3 may have a convex portion 31 formed, which swells slightly upward at the center part of the top plate portion 5 in the width direction thereof. That is, the convex portion 31 protrudes above the upper surface of the trough lid 19 in the direction opposite to the leg portions 7. Forming the convex portion 31 creates a gap 4 between the trough lid 19 and the top plate portion 5. Thus, when the walker steps on the top plate portion 5, the convex portion 31 formed on the top plate portion 5 sinks and the contact area between the top plate portion 5 and the walker's shoe sole can be increased.

In this case, though depending on the relation of the outer shapes of the trough lid such as the non-skid protrusions formed on the upper surface of the trough lid, the top plate portion should not protrude above the line outlining the top parts of the trough lid on its cross section. Considering these points, the gap created between the base portion of the trough lid and the top plate portion is preferably 2.0 mm or less, and more preferably, 1.2 mm or less, for example.

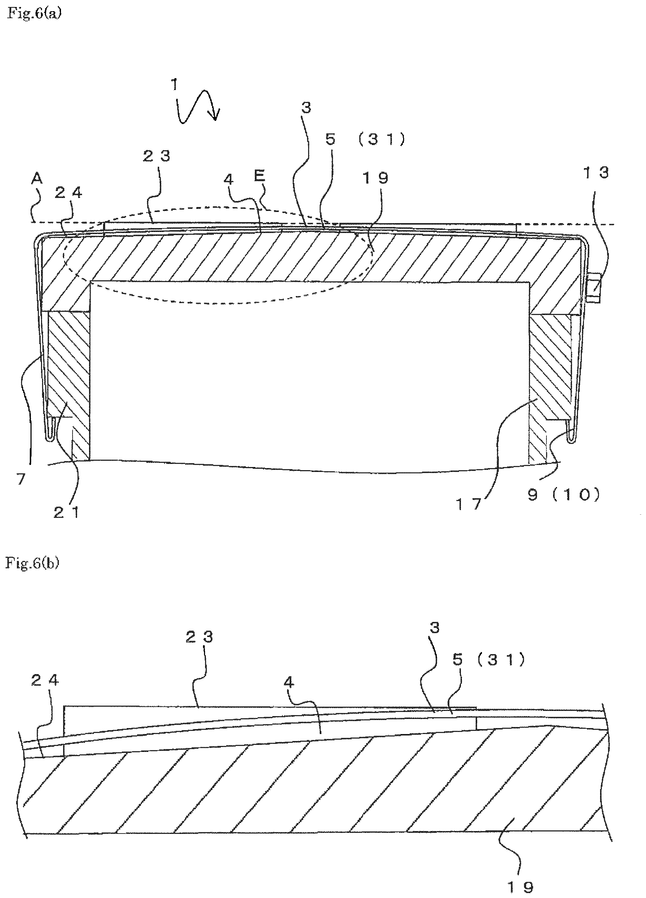

Also, FIG. 6 (a) corresponds to FIG. 5 (a) and FIG. 5 (b), and FIG. 6 (b) is an enlarged view of E section in FIG. 6 (a). As shown in FIG. 6 (a) and FIG. 6 (b), the upper surface of the trough lid 19 (the surface excluding the protruding portions 23) may not be flat in the width direction and a convex portion may be formed at the center of the trough lid 10 in its width direction. This may be covered with the metal band piece 3 formed with the convex portion 31 at the center portion in the width direction thereof. Even in this case, in which the destaticizing member is put over the trough formed with a convex portion at the center of the trough lid 19 in the width direction, the gaps 4 are created at least on both sides of the center in the width direction of the trough lid 19. With such a trough shape, when the walker steps on the top plate portion 5, the convex portion 31 formed on the top plate portion 5 sinks in a similar way and it is also effective in increasing the contact pressure and contact area between the top plate portion 5 and the walker's shoe sole. At this time, the peak of the convex portion 31 of the destaticizing member and the peak of the convex portion of the trough lid 19 may be in contact with each other or may not necessarily be in contact with each other, depending on the structures of both the trough lid 19 and the convex portion 31 of the top plate portion 5.

Here, although drawing is omitted, the metal band piece 3 with a flat top plate portion 5 as in FIG. 5 (a) may be put over the trough lid 19 formed with a convex portion at the center part in the width direction thereof in such a manner that the metal band piece 3 contacts the convex portion of the trough lid 19 at the center part in the width direction thereof. Also in this case, gaps are formed on both sides of the center of the trough lid 19 in the width direction so, when the walker steps on the top plate portion, the convex portion formed on the top plate portion sinks and the contact area between the top plate portion 5 and the walker's shoe sole is increased.

Also, when the convex portion 31 is pushed in, the metal band piece 3 can be transformed, opening the lower ends of the leg portions 7 outward away from each other. Opening the lower ends of the leg portions 7 can decrease the holding margin of the locking claws 10. Thus, when removing the metal band piece 3, the metal band piece 3 can be removed from the trough easily by pushing in the convex portion 31. Also in this case, it is preferable that the top part of the convex portion 31 is positioned between the upper surface of the trough lid 19 (the upper surface excluding the protruding portions 23) and the upper surfaces of the protruding portions 23.

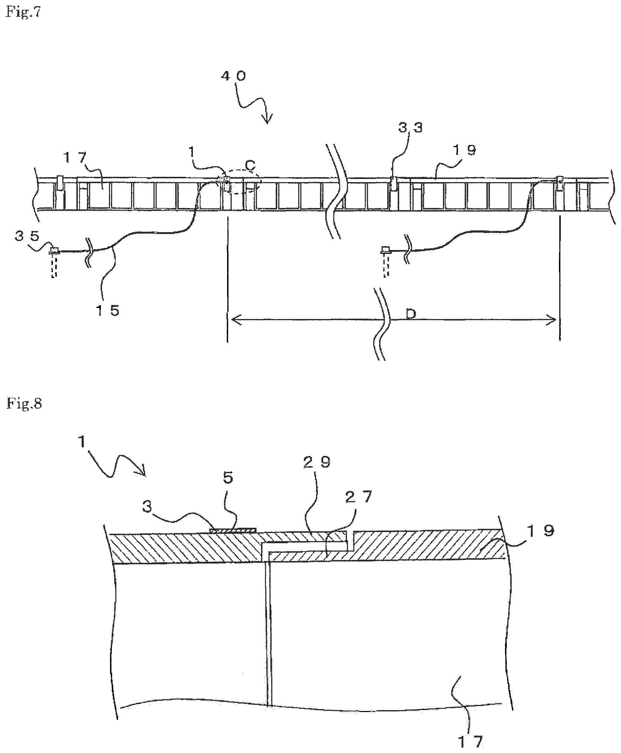

Next, a trough line 40 that is formed by joining a plurality of the trough bodies 17 together as well as joining a plurality of the trough lids 19 together. FIG. 7 is a drawing showing a trough line 40 using the structure to mount the destaticizing member to the trough 30. As mentioned above, a plurality of the trough bodies 17 are joined together by fitting the respective male fitting portions and the female fitting portions with each other. The trough lids 19 are put on the trough bodies 17 respectively and are fixed by the fixing portions 33 and the destaticizing members 1.

One end of the lead wire 15 of the destaticizing member 1 is connected to the connecting portion of the metal band piece 3, and the other end is connected to an anchor bolt 35 of the concrete, which is an earth portion. That is, the lead wire 15 works as an earth wire. Other than the anchor bolt 35 as the earth portion which is earthed through the lead wire 15, a metal structure or underground, for example, may be used. That is, the leg portions 7 and the earth portion should be electrically connected by a conductive member.

The shape of the fixing member 33 is approximately similar to the metal band piece 3 without the bolt 11 or the like. That is, the fixing member 33 is fitted into the trough from the upper part of the trough lid 19 and then the locking claws at the lower ends of the leg portions of the fixing member 33 are fixed to the locking portions 21 so that the fixing member 33 is fixed to the trough. At this point, a pair of the leg portions of the fixing member 33 interpose the side faces of the trough body 17 and the trough lid 19 so that the fixing member 33 is fixed to the trough. That is, the trough lid 19 is fixed to the trough body 17 by using a fixing member that is formed only with the metal-made conductive member (formed with the metal band piece 3 without the bolt 11 and the like) at the fixing position for the trough body 17 and the trough lid 19 except for the position on which the destaticizing member 1, which will be described below, is provided.

FIG. 8 is a cross sectional view of the trough at C section in FIG. 7. As mentioned above, the lower thin-layered portion 27 is formed at one end of the trough lid 19 in the longitudinal direction. Also, the upper thin-layered portion 29 is formed at the other end of the trough lid in the longitudinal direction. At the joint part of the trough, the upper thin-layered portion 29 is disposed overlapping the lower thin-layered portion 27. That is, the end parts of the adjacent trough lids 19 overlap with each other.

Here, when the destaticizing member 1 is to be fixed at the overlapped position of the upper thin-layered portion 29 or in the proximity thereof (in the proximity of the upper thin-layered portion 29), the fixing portion for the trough lid 19 should be fixed in the proximity of the lower thin-layered portion 27; and when the fixing portion for the trough lid 19 is to be fixed at the overlapped position of the upper thin-layered portion 29 or in the proximity thereof (in the proximity of the upper thin-layered portion 29), the destaticizing member 1 should be fixed in the proximity of the lower thin-layered portion 27. In this way, the first trough lid 19 and the second trough lid 19 can be fixed.

If one trough has two or more positions for fixing the trough lid 19 to the trough body 17, the each trough lid 19 is fixed to the respective trough on at least one location by the fixing member. Thus, in mounting the additional destaticizing member 1 to an existing trough line, the destaticizing member 1 should be fixed on the fixing position of the trough lid 19 on which the fixing member for the trough lid 19 is not mounted. Also, if the trough lid 19 is fixed at the overlapped position of the upper thin-layered portion 29 or in the proximity of the overlapped position (in the proximity of the upper thin-layered portion 29), the lid can be fixed with the lower thin-layered portion 27 and the upper thin-layered portion 29 overlapping with each other. Thus, fixing of the trough lid 19 can be done at just one location per trough. Thus, it is preferable that the destaticizing member 1 is fixed at the overlapped position of the upper thin-layered portion 29 and the lower thin-layered portion 27 or in the proximity thereof.

As above, the fixing position for the trough lid 19 to the trough body 17 is preferably on the upper thin-layered portion 29 or in the proximity of the upper thin-layered portion 29. Fixing the trough lid 19 at this part from above allows the upper trough lid 19 to press the lower trough lid 19 and to prevent the trough lids 19 from opening. Thus, disposing the destaticizing member 1 at this position enables the destaticizing member 1 to function as a fixing member for the trough lid 19. That is, the destaticizing member 1 includes a structure as a fixing member for the trough lid 19 and the trough lid 17.

As above, the destaticizing member 1 can be disposed at the same position as the fixing position of the trough lid 19 by the fixing member 33. That is, the destaticizing member 1 can be disposed instead of the fixing member 33. On this occasion, since the fixing member 33 and the destaticizing member 1 are both formed of an approximately similar metal band piece, the mounting position of the fixing member 33 and the mounting position of the destaticizing member 1 can be mutually exchangeable.

Alternatively, the fixing members 33 may be disposed on every fixing position of the trough lid 19 and the trough body 17, and the trough lids 19 may be fixed only by the fixing members 33. In this case, the destaticizing member 1 may be disposed additionally at a part different from that of the fixing member 33 (in the proximity of the lower thin-layered portion 27, for example).

As shown in FIG. 7, the trough line 40 has the trough lids 19 that are fixed at predetermined intervals. More specifically, the fixing member 33 and the destaticizing member 1 are disposed for every one trough body 17 and one trough lid 19. Thus, a plurality of the destaticizing members 1 can be provided at freely selected intervals of an integral multiple of the length of the trough body 17. Thus, the mounting interval for the destaticizing member 1 can be easily found out from the number of the trough body 17, without measuring the arrangement intervals of the destaticizing member 1 (D in the drawing).

Next, a method for eliminating static electricity by using the above-mentioned destaticizing structure will be described. When the worker walks on the trough line 40 (the structure to mount a destaticizing member to a trough 30) on which the destaticizing member 1 is mounted as above, the worker encounters the destaticizing member 1 every predetermined distance. Thus, when the worker steps onto the destaticizing member with shoes, static electricity charged to the worker is collected by the top plate portion and discharged to the earth portion. That is, the top plate portion 5 functions as a power collecting plate. Thus, the static electricity charged to the worker can be eliminated. Here, the length of the top plate portion 5 may be shorter than the length of the worker's shoe sole.

Here, the electric charges that are charged to the worker are determined according to the triboelectric series depending on the materials of the shoe sole and the trough. However, in general, the shoe sole acquires positive charges and the worker's foot part in the proximity of the shoe sole acquires negative charges in many cases.

When the length of the destaticizing member 1 in the longitudinal direction of the trough is shorter than the length of the worker's shoe, the part where the shoe sole comes into contact with the top plate portion 5 of the destaticizing member 1 is destaticized instantly; whereas the part where the shoe sole is not in direct contact with the top plate portion 5 is not destaticized instantly. However, since the shoe sole is charged with electrical charges of the same type, the charged electrical charges move toward the contact part between the shoe sole and the top plate portion 5 due to the repulsion of the static electricity of the electrical charges of the same type, and thus further promoting the destaticizing.

Here, to eliminate the static electricity with certainty, the worker should step onto the top plate of the destaticizing member 1 once again so that the part of the shoe sole that has not been in contact with the destaticizing member 1 comes into contact with the destaticizing member 1 and the destaticizing can be speedily carried out with certainty. In this case, the static electricity that has been remained on the shoe sole without touching the top plate portion 5 can be eliminated in contact with the top plate portion 5, and thus it is preferable that the worker should step onto the top plate portion 5 once again on different contacting positions with the shoe sole to make sure the destaticizing.

When the worker walks on the trough line 40, the charged electricity increases according to the walking distance. According to "Recommendations for Requirements for avoiding Electrostatic Hazards in Industry" issued in 2007 by National Institute of Occupational Safety and Health, Japan, it is reported that the worker would feel severe pain in discharging if the worker's body is charged with a voltage of 3 kV or more.

Thus, though depending on the circumstances such as the working environment or the workers themselves, the destaticizing member 1 should be preferably mounted so that the worker would not get electrical charges of 3 kV or more. That is, it is preferable to find a relationship between the worker's walking distance and the charged voltage, to calculate an assumption of the charging amount according to the worker's walking distance based on this result, to determine the mounting intervals of the destaticizing member 1 to meet this charging amount, and to provide the destaticizing members 1 at the predetermined fixing positions of the trough lid 19 of the trough line 40. For example, it is preferable that a plurality of the destaticizing members 1 are provided at intervals of 100 m or less on the trough line 40. In this way, the worker walking on the trough line 40 can step on the top plate portion 5 of the destaticizing member 1 and the static electricity charged to the worker due to static induction can be repeatedly eliminated. However, it is highly likely that the worker would acquire charged voltage of 3 kV or more in every 50 m as described below. Thus, more preferably, the destaticizing member 1 is mounted every 50 m so that the worker can be prevented from acquiring electrical charge of 3 kV or more, or can be destaticized to the lower electric potential of 3 kV or less.

When the same member as the metal band piece 3 of the destaticizing member 1 is used as the fixing member 33, it is possible that the worker cannot distinguish between the fixing member 33 and the destaticizing member 1. For this reason, a mark or the like that enables the worker to distinguish the destaticizing member 1 from the fixing member 33 may be provided on the top plate portion 5 of the metal band piece 3.

As described above, according to the present embodiment, the destaticizing member 1 is provided on the upper surface of the trough lid 19 of the resin-made trough line 40, and when the worker walks on the trough line 40 and steps over the top plate portion 5 of the destaticizing member, the static electricity charged to the worker due to static induction can be eliminated. Thus, the static electricity charged to the worker during walking on the trough line 40 can be easily eliminated. Also, the destaticizing member 1 includes a function as the fixing member 33 and thus can be disposed instead of the fixing member 33. That is, the destaticizing member 1 can fix the trough lid 19 to the trough body 17 and discharge the static electricity collected from the top plate portion 5 of the destaticizing member 1 through the lead wire 15 to the earth portion. Also, the destaticizing member 1 can be disposed at any of the fixing positions for the fixing member 33.

Also, since the destaticizing member 1 can be mounted onto the mounting position of the fixing member 33 for the trough, conventional troughs can be used as they are. Also, when a plurality of the destaticizing members 1 are to be mounted at the predetermined intervals, the plurality of the destaticizing member 1 can be mounted easily on the trough line 40 at freely selected intervals or positions that are an integral multiple of the length of the trough apart, or at the fixing positions of the trough lid that are away from the above freely selected positions for the distance equivalent to the mutual distance between the fixing positions of the trough. Thus, the mounting positions for the destaticizing members 1 can be determined so as to meet the worker's assumed charging amount.

Also, overlapping the lower thin-layered portion 27 and the upper thin-layered portion 29 of the trough lid 19 with each other and mounting the destaticizing member 1 at the overlapped position or in the proximity thereof can make sure that the trough lid 19 is fixed with certainty.

Also, the lead wire 15 does not obstruct the walker since the lead wire 15 is not connected to the top plate portion 5 but is connected to the leg portion 7. Also, the worker does not tumble over the metal band piece 3 since the top plate portion 5 does not protrude above the plane that is formed by connecting the tip ends of the protruding portions on the upper surface of the trough lid 19 on the cross section taken in the width direction thereof.

Also, the lead wire 15 is connected to the outer face of the leg portion 7 so that the handling of the lead wire 15 is easy and can be easily connected to the earth portion, which is in the proximity of the trough line 40.

Also, the convex portion 31, which swells gradually in a convex shape, is formed at the center of the top plate portion 5 so the convex portion 31 formed on the top plate portion 5 sinks when the walker steps onto the top plate portion 5 and this can increase the contact area between the top plate portion 5 and the shoe sole. Also, pushing in the convex portion 31 facilitates removing of the metal band piece 3.

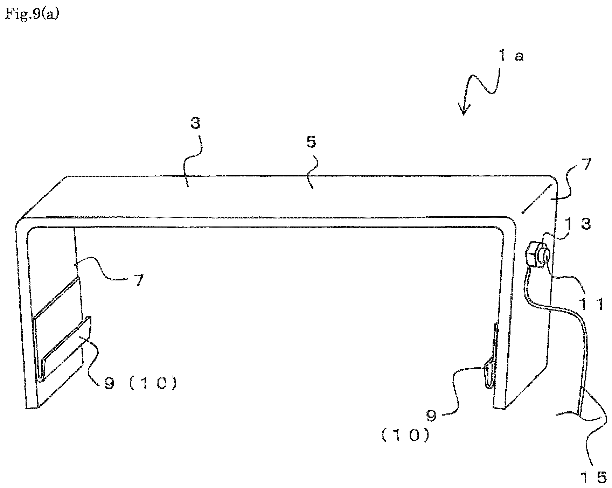

Next, a second embodiment will be described. FIG. 9 (a) is a perspective view showing a destaticizing member 1a according to the second embodiment. In the descriptions below, the structures having the same functions as in the destaticizing member 1 and the like will have the same notations as in FIG. 1 to FIG. 8 and the redundant descriptions will be omitted.

The destaticizing member 1a has a similar structure as the destaticizing member 1 except that the locking claws 10 are formed separately from the leg portions 7. The locking claw 10 is formed of a plate member that is different from the leg portion 7 or the like of the metal band piece 3. Either of the leg portions 7 and the locking claws 10 are made of materials having elasticity. The locking claws 10 are joined to the inner face sides of the leg portions 7 so as to face each other inwardly so that the same function as the locking claws 10 of the destaticizing member 1 can be obtained.

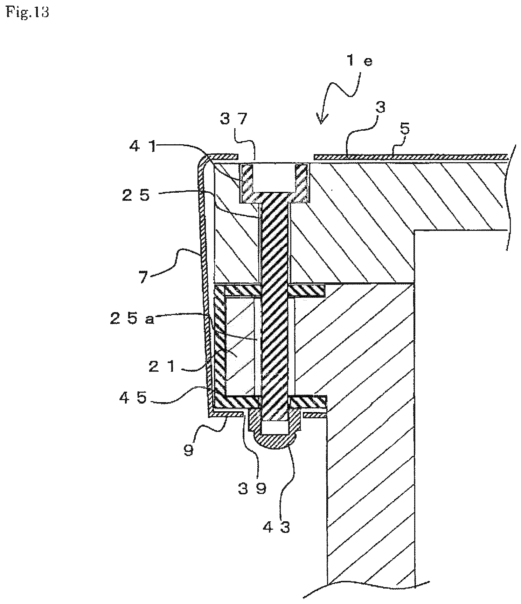

As above, according to the second embodiment, the same effects as in the first embodiment can be obtained. Alternatively, another structure similar to FIG. 13, whose drawing is not shown in particular, can be considered. For example, on the upper part of a fixing member 45, the shorter leg portion 7 of the destaticizing member 1a is formed and the fixing portion 9 formed by folding the tip of the leg portion 7 can be inserted between the lower surface of the trough lid and the fixing member 45 so as to be disposed touching the lower surface of the trough lid. At this point, a hole may be provided in the fixing portion 9 at a position corresponding to a nut 43 so as to be fixed by a bolt and a nut.

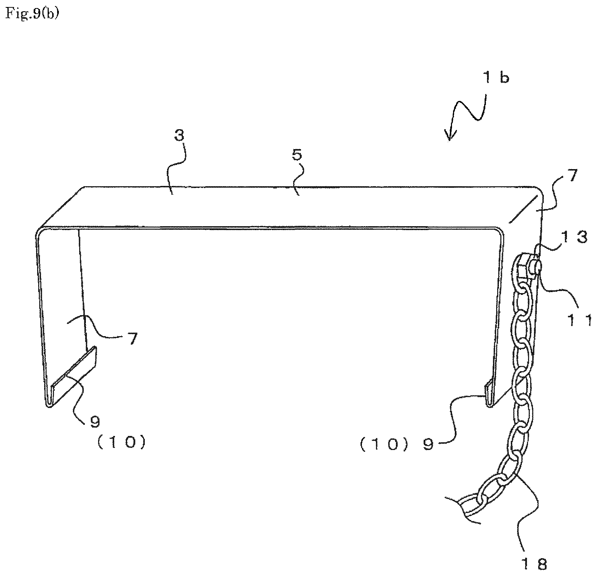

Next, a third embodiment will be described. FIG. 9 (b) is a perspective view showing a destaticizing member 1b according to the third embodiment. The destaticizing member 1b has a similar structure as the destaticizing member 1 except that a chain member 18, instead of the lead wire 15, is fixed to the bolt 11 by the nut 13. The other end of the chain member 18 is connected to the earth portion. Thus, the static electricity collected by the top plate portion 5 of the destaticizing member 1b can be discharged through the chain member 18 to the earth portion.

According to the third embodiment, the same effects as in the first embodiment can be obtained. As above, in the present invention, the lead wire 15 or the chain member 18 can be applied as the conductor member for connecting the earth portion and the metal-made conductive member of the destaticizing member. The examples in which the lead wire 15 is used as the conductive member will be shown in the descriptions below.

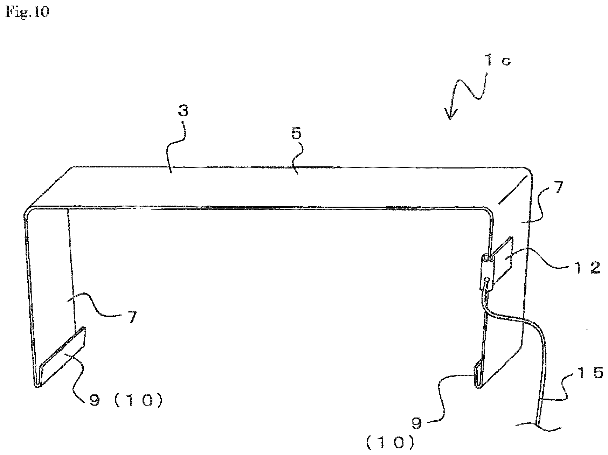

Next, a fourth embodiment will be described. FIG. 10 is a perspective view showing a destaticizing member 1c according to the fourth embodiment. The destaticizing member 1c has a similar structure as the destaticizing member 1 except that a clip 12 is used for fixing the lead wire 15 to the leg portion 7. The clip 12 is a metal-made member having elasticity and interposes and holds a part of the leg portion 7 so as to be mounted thereon. On an outer side face of the clip 12, the lead wire 15 is connected. That is, one of the end of the lead wire 15 is connected to the elastic clip 12, and the other end of the lead wire 15 is connected to the earth portion. The clip 12 may be further fixed with a rivet to the leg portion 7.

As above, according to the fourth embodiment, the same effects as in the first embodiment can be obtained.

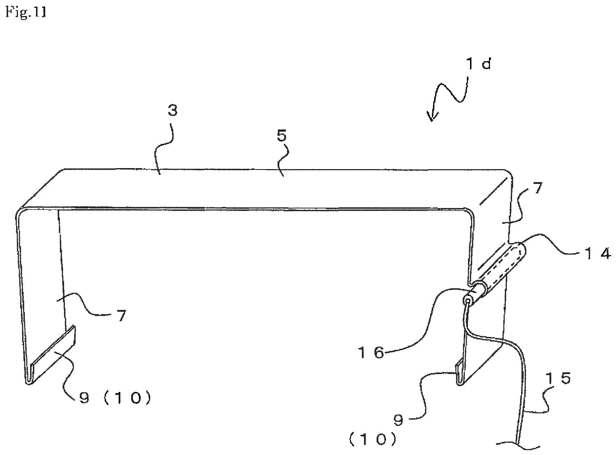

Next, a fifth embodiment will be described. FIG. 11 is a perspective view showing a destaticizing member 1d according to the fifth embodiment. The destaticizing member 1d has a similar structure as the destaticizing member 1 except that a curved portion 14 is formed on a part of the leg portion 7 and a connector 16 is used to connect the lead wire 15 to the leg portion 7.

The curved portion 14 is in a substantially Ω shape (a substantially circular shape with an open part) when viewed from the front and is formed on the face side of the leg portion 7. The curved portion 14 is formed on the leg portion 7 by press molding and formed over the entire width direction of the leg portion 7 so that the curved portion 14 is parallel to the longitudinal direction of the trough when mounted on the trough. Thus, the curved portion 14 creates a substantially circular space on the leg portion 7.

The metal-made connector 16 is inserted into the curved portion 14 (the space formed by the curved portion 14). The connector 16 is in a substantially cylindrical shape corresponding to the space. The lead wire 15 is connected to an edge face of the connector 16. Inserting the connector 16 into the curved portion 14 allows the lead wire 15 to be electrically connected with the metal band piece 3. That is, one end of the lead wire 15 is connected to the connector 16, which is fixed to the leg portion 17, and the other end of the lead wire 15 is connected to the earth portion. In this case, it is preferable that the connector 16 having a length longer than the width of the metal band piece 3 (the leg portion 7) should be used to prevent the connector 16 from slipping off.

As above, according to the fifth embodiment, the same effects as in the first embodiment can be obtained.

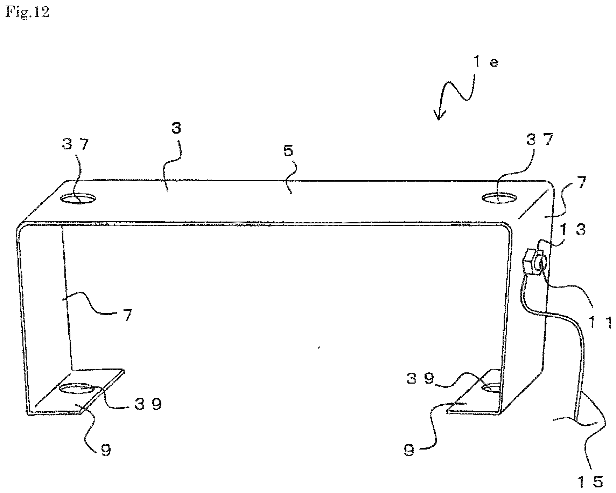

Next, a sixth embodiment will be described. FIG. 12 is a perspective view showing a destaticizing member 1e according to the sixth embodiment. The destaticizing member 1e has a similar structure as the destaticizing member 1 except that holes 37 and 39 are formed on some parts of the metal band piece 3.

The holes 37 are formed in the proximity of either end parts of the top plate portion 5. Also, the fixing portion 9 of the destaticizing member 1e is not a locking claw but is formed by being bent substantially perpendicular to the leg portion 7 inwardly. That is, the fixing portions 9 that are bent toward the inner direction of the trough (the direction in which the leg portions 7 face with each other) are formed on both sides of the leg portions 7. The hole 39 is formed on each of these bent fixing portions 9. The hole 37 in the proximity of both ends of the top plate portion 5 and the hole 39 of the fixing portion 9 on each side of the leg portion 7 are arranged in parallel so as to face with each other.

FIG. 13 is a partial cross sectional view showing the destaticizing member 1e mounted on the trough. As mentioned above, the method for fixing the trough lid 19 to the trough body 17 is not limited to the use of the fixing member 33 formed of the metal band piece. In the example shown in FIG. 13, a fixing member 45 is used.

The fixing member 45 has upper and lower gripping portions formed by bending a plate like member so as to interpose the locking portion 21 vertically. Also, a hole is formed at the corresponding part of each of the upper and lower gripping parts of the fixing member 45. Also, a nut 43 is joined and integrated with the lower face of the fixing member 45, which corresponds to the hole on the lower gripping part, by welding or the like. The nut 43 is preferably a cap nut.

Also, as mentioned above, a hole 25 is formed on the trough lid 19. Also, a hole 25a is formed at a part of the locking portion 21, corresponding to the hole 25 of the trough lid 19 when the trough 17 is fixed to the trough body 17. That is, the hole 25 of the trough lid 19 and the hole 25a of the locking portion 21 are arranged on a straight line. Also, when the fixing member 45 is fixed to the locking portion 21, the position of the hole 25a corresponds to the position of the hole on the gripping portion of the fixing member 45.

In this state, a bolt 41 is inserted from the hole 25. The bolt 41 penetrates the holes 25 and 25a. By joining the bolt 41 to the nut 43 of the fixing member 45, the trough lid 19 is fixed to the trough body 17.

Moreover, with this state, the destaticizing member 1d is mounted onto the trough lid 19 from above. On this occasion, the hole 37 in the top plate portion 5 corresponds to the position of the hole 25 (the bolt 41) of the trough lid 19. Also, the fixing portion 9 is put over the nut 43 at the lower face side of the fixing member 45 (the locking portion 21) and locked. On this occasion, the hole 39 in the fixing member 9 corresponds to the position of the nut 43. Thus, the state of the bolt 41 can still be checked by sight with the destaticizing member 1d being fixed. Also, the nut 43 never interferes with the fixing portion 9 of the metal band piece 3.

As above, according to the sixth embodiment, the same effects as in the first embodiment can be obtained.

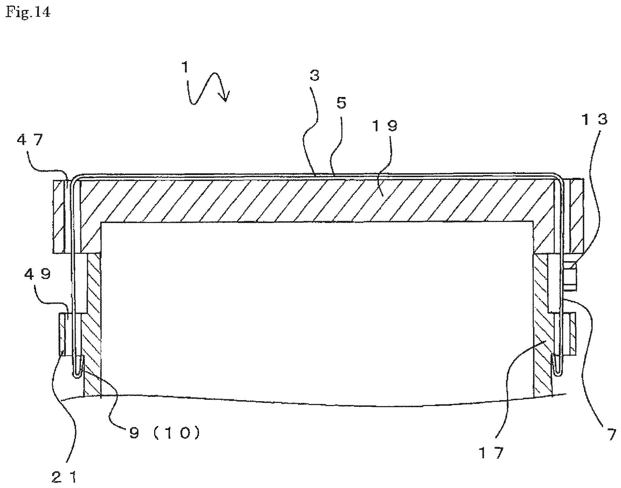

Next, a seventh embodiment will be described. FIG. 14 is a cross sectional view showing a structure to mount the destaticizing member 1 according to the seventh embodiment. Although an example using the destaticizing member 1 is shown in FIG. 14, the other destaticizing members 1a to 1d may also be used.

In the above-mentioned embodiments, the examples in which the metal band piece 3 is fixed by interposing the trough body 17 and the trough lid 19 from the sides thereof are described. In the present embodiment, a hole 47 through which the leg portion 7 (the fixing portion 9) of the metal band piece 3 can be inserted is formed in the proximity of each end of the trough lid 19. Also, the hole 47 through which the leg portion 7 (the fixing portion 9) of the metal band piece 3 can be inserted is similarly formed in the locking portion 21 of the trough body 17.

When the trough lid 19 is mounted over the trough body 17, the hole 47 of the trough lid 19 and the hole 49 of the locking portion 21 are arranged in a straight line. With this state, the leg portion 7 of the metal band piece 3 is inserted into the hole 47 of the trough lid 19 and the hole 49 of the locking portion 21 from the upper part of the trough lid 19. When the metal band piece 3 is pushed in completely, the locking claw 10 at the lower end part of the leg portion 7 is hooked to the lower face of the locking portion 21 (the edge part of the hole 49) and the metal band piece 3 is fixed to the trough.

As above, according to the seventh embodiment, the same effects as in the first embodiment can be obtained.

### [Working Examples]

Next, a destaticizing member is mounted onto a trough line in practice and the destaticizing effects on the worker are verified.

### (Measuring electric potential charged to a human body)

First, the electric potential charged to a human body when a worker walked for 50 m over a trough line using troughs made of recycled resin was measured by using a human body static meter made by Kasuga Denki, Inc. The temperature was 15 C° and the humidity was 30 % at the time of measurement. The results are shown in Table 1.

**[Table 1]**

| | Worker A | Worker B | Worker C |
|---|---|---|---|
| Maximum Potential (kV) | 1.8 | 2.8 | 3.5 |

According to Table 1, although there are variations depending on the workers, it is found out that the potential may exceed 3.0 kV after around 50 m of walking. As mentioned above, if the electric potential charged to a human body exceeds 3.0 kV, the worker may feel a pain entailed in discharging depending on the method of destaticizing. Here, the present invention provides a method for eliminating static electricity charged to a human body indirectly by destaticizing the shoe sole with less influence from static electricity in destaticizing, so it is preferable to mount the destaticizing member on the trough line at intervals of 50 m or less.

### (Destaticizing effects by the destaticizing member)

Next, the destaticizing effects of the charged worker were evaluated using the destaticizing member according to the present invention. A destaticizing member having the similar structure as the destaticizing member 1 shown in FIG. 1 was used. The lead wire was connected to the anchor bolt in the proximity of the trough line. The worker walked on the trough line for a predetermined time in advance to measure the worker's charged electric potential to the human body. Then, the change in the charged electric potential to the human body was evaluated after the worker stepped onto the destaticizing member mounted on the trough line by a foot. For the worker's shoes, both polyurethane shoe sole and EVA+NBR shoe sole were evaluated. The results are shown in Table 2.

**[Table 2]**

| | polyurethane shoe sole | | EVA+NBR shoe sole | |
|---|---|---|---|---|
| | after a walk | one second after destaticizing | after a walk | one second after destaticizing |
| Maximum Potential (kV) | 3.0 | 0.2 | 3.2 | 0.3 |

As shown in Table 2, it is found out that, even if the electric potential charged to a human body is 3.0 kV or more, the human body was destaticized instantly one second after stepping onto the destaticizing member. Also, this effect can be obtained regardless of the material used for the shoe sole. This shows that the destaticizing member can reduce the static electricity to 1 kV or less, which is a level that the worker would feel no pain in discharging.

Next, the effects of destaticizing by using the metal band piece having the convex portion that swells slightly upward at the center part of the top plate potion in the width direction with a gap created between the trough lid and the top plate portion shown in FIG. 5 (b) were evaluated. The results of the experiment using the shoe sole made of the same material as in Table 2, i.e. the synthetic rubber of EVA and NBR, are shown in Table 3.

At this time, the maximum gap between the trough lid and the top plate portion was 1.0 mm and the electric potential was set to the 3.2 kV, which is equal to the walker's maximum electric potential before destaticizing. In this case, the worker's electric potential one second after stepping is decreased to 0.24 kV, which is 0.06 kV less than the result in Table 2.

**[Table 3]**

| | EVA+NBR shoe sole (without convex portion) | | EVA+NBR shoe sole (with convex portion) | |
|---|---|---|---|---|
| | after a walk | one second after destaticizing | after a walk | one second after destaticizing |
| Maximum Potential (kV) | 3.2 | 0.3 | 3.2 | 0.24 |

Here, the trough lid is fixed by using an L-shaped buckle disclosed in JP-A-2005-094958. At the same time, an experimental destaticizing member was made using the L-shaped buckle connected with a lead wire, which is also connected to the earth portion, as a power connecting member of the destaticizing member instead of the metal band piece, and the experiment for destaticizing was carried out with this experimental destaticizing member. The buckle is made from a metal rod bent in a U shape which is further bent into an L shape along the side faces of the trough body. This experiment resulted in insufficient destaticizing. This is because it is difficult to step on the buckle as the power collecting member on the upper surface of the trough lid, and, even if the worker could step on the buckle successfully, the contact area between the shoe sole on the upper surface of the trough lid and the buckle is extremely small.

Although details are omitted, the same effects can be obtained when the other earth portion, such as a metal structure or underground, than the anchor bolt is used. The destaticizing using the destaticizing member according to the present invention indirectly eliminates static electricity charged to a human body due to static induction by destaticizing the worker's work shoes made of insulated materials, not by directly destaticizing the human body of the worker, and thus the human body does not receive electric shock in destaticizing. Also, as mentioned above, destaticizing is carried out through the shoe, which is an insulator, so the electrical charges inside the shoe move due to static electricity repulsion between the charged electrical charges and this further promotes destaticizing. However, some of the electrical charges may remain behind, but electricity can be eliminated below the electric potential at which the worker feels no pain in discharging so this is not a practical problem.

Although the embodiments of the present invention have been described referring to the attached drawings, the technical scope of the present invention is not limited to the embodiments described above. It is obvious that persons skilled in the art can think out various examples of changes or modifications within the scope of the technical idea disclosed in the claims, and it will be understood that they naturally belong to the technical scope of the present invention.

### DESCRIPTION OF NOTATIONS

- 1, 1a, 1b, 1c, 1d, 1e: destaticizing member
- 3: metal band piece
- 4: gap
- 5: top plate portion
- 7: leg portion
- 9: fixing portion
- 10: locking claw
- 11: bolt
- 12: clip
- 13: nut
- 14: curved portion
- 15: lead wire
- 16: connector
- 17: trough body
- 18: chain member
- 19: trough lid
- 21: locking portion
- 23: protruding portion
- 24: base portion
- 25, 25a: hole
- 27: lower thin-layered portion
- 29: upper thin-layered portion
- 30: structure to mount destaticizing member to trough
- 31: convex portion
- 33: fixing member
- 35: anchor bolt
- 37, 39: hole
- 40: trough line
- 41: bolt
- 43: nut
- 45: fixing member
- 47, 49: hole

## Claims

1. A structure (30) comprising:
a trough for laying cables, wherein the trough comprises a trough body (17) and a resin-made trough lid (19) that is disposed over the trough body (17);
and a destaticizing member (1, 1a, 1b, 1c, 1d, 1e) comprising a conductor member (15, 18) and a metal-made conductive member (3) having a connection portion (11) to be connected with the conductor member (15, 18);
wherein a first end of the conductor member (15, 18) is connected to the connection portion (11) and a second end of the conductor member (15, 18) is connectable to an earth portion;
wherein the metal-made conductive member (3) comprises a top plate portion (5) and a pair of leg portions (7) that are connected to both ends of the top plate portion (5) the metal-made conductive member (3) being formed by bending an elastic band-shaped metal piece;
wherein the top plate portion (5) is disposed so as to cover an upper surface of the trough lid (19) in the width direction thereof;
wherein the pair of the leg portions (7), which are bent with a sharp angle to the top plate portion (5), can open and interpose and hold side faces of the trough body (17), whereby pressing forces are applied to the side faces; and
wherein the metal-made conductive member (3) is fixed to the trough body (17).

2. The structure according to claim 1, wherein:
the metal-made conductive member (3) is formed by folding a band-shaped metal piece so as to form the top plate portion (5) and the leg portions (7) in one body, and a convex portion (31) protruding above the upper surface of the trough lid (19) is formed at the center of the top plate portion (5) so that a gap (4) is created between the convex portion (31) and the trough lid (19).

3. The structure according to claim 1, wherein:
protruding portions that protrude above a base portion are formed on the upper surface of the trough lid (19); and
the top plate portion (5) is disposed on an upper surface of the base portion of the trough lid (19) and is, furthermore, positioned between upper surfaces of the protruding portions and the upper surface of the base portion.

4. The structure according to claim 1, wherein:
a fixing portion (9) to be fixed to the trough body (17) is provided on the leg portion (7);
the fixing portion (9) has a locking claw (10) that is formed at a lower end portion of the leg portion (7);
the locking claws (10) interpose and hold side faces of the trough body (17) so that the metal-made conductive member (3) is fixed to the trough body (17).

5. The structure according to claim 4, wherein:
the metal-made conductive member (3) comprises a structure as a fixing member (45) for fixing the trough lid (19) to the trough body (17), and the destaticizing member (1, 1a, 1b, 1c, 1d, 1e) can be mounted on the same position as the fixing position of the trough lid (19) to the trough body (17).

6. The structure according to claim 1, wherein:
a bolt (11) is welded to the leg portion (7) of the metal-made conductive member (3) and one end of the conductor member (15, 18) is connected and fixed to the bolt (11) by a nut (13) while the other end of the conductor member (15, 18) is connected to the earth portion.

7. The structure according to claim 1, wherein:
the conductor member (15, 18) is a lead wire (15) or a chain member (18); and
the destaticizing member (1, 1a, 1b, 1c, 1d, 1e) fixes the trough lid (19) to the trough body (17).

8. The structure according to claim 7, wherein:
the conductive member is a lead wire (15); and
one end of the lead wire (15) is connected to an elastic clip (12) that interposes and holds a part of the leg portion (7) while the other end of the lead wire (15) is connected to the earth portion.

9. The structure according to claim 7, wherein:
the conductive member is a lead wire (15); and
one end of the lead wire (15) is connected to a connector (16) that is fixed to the leg portion (7) while the other end of the lead wire (15) is connected to the earth portion.

10. The structure according to claim 7, wherein:
the earth portion is either a concrete anchor bolt (35), a metal structure, or underground, and the leg portion (7) and the earth portion are electrically connected by the conductor member (15, 18).

11. A trough line (40) that is formed by joining a plurality of structures according to one of claims 1 to 10.

12. The trough line (40) according to claim 11, wherein:
the trough line (40) is formed by joining the trough bodies (17) of the structures according to one of claims 1 to 5 together as well as by joining the trough lids (19) of the structures according to one of claims 1 to 5 together;
wherein the trough lid (19) of each of the structures according to one of claims 1 to 5 comprises a lower thin-layered portion (27) at one end of a longitudinal direction thereof and an upper thin-layered portion (29) at the other end;
for the adjacent trough lids (19), the upper thin-layered portion (29) of a first trough lid (19) overlaps the lower thin-layered portion (27) of a second trough lid (19);
for the adjacent trough lids (19), a respective destaticizing member (1, 1a, 1b, 1c, 1d, 1e) of the structures according to one of claims 1 to 5 is disposed on the overlapping position of the upper thin-layered portions(29) and the lower thin-layered portions (27) or in the proximity of the upper thin-layered portion (29), so as to fix the first trough lid (19) and the second trough lid (19) of respective adjacent trough lids(19) together.

13. The trough line (40) according to claim 11, wherein:
a fixing member (45), which is formed from only the metal-made conductive member (3), is used to fix the trough lid (19) to the trough body (17) at a fixing position of the trough body (17) and the trough lid (19), the fixing position being a position other than the position provided with the destaticizing member (1, 1a, 1b, 1c, 1d, 1e).

14. The trough line (40) according to claim 11, wherein:
the destaticizing members (1, 1a, 1b, 1c, 1d, 1e) of said structures according to one of claims 1 to 5 are provided at intervals of 100 m or less on the resin-made trough line (40), so that the through line (40) is configured to eliminate static electricity charged to the worker due to static induction repeatedly every time the worker walking on the trough line (40) steps onto a top plate portion (5) of a respective one of the destaticizing members (1, 1a, 1b, 1c, 1d, 1e).

15. The trough line (40) according to claim 14, wherein:
a mounting distance between the destaticizing members (1, 1a, 1b, 1c, 1d, 1e) provided on the trough line (40) is equivalent to either at positions each of which are apart from one another with freely selected intervals of an integral multiple of the length of the trough body (17), or at positions that are away from the positions each of which are apart from one another with freely selected intervals of an integral multiple of the length of the trough body (17) for the distance between the fixing positions of the trough lid (19).

16. A method for eliminating static electricity using the structure according to one of claims 7 to 10, comprising:
discharging the static electricity collected by the top plate portion (5) of the destaticizing member (1, 1a, 1b, 1c, 1d, 1e) to the earth portion through the lead wire (15) or the chain member (18).

17. The method for eliminating static electricity according to claim 16,
wherein:
the conductor member (15, 18) is a chain member (18); and
said discharging discharges static electricity collected by the top plate portion (5) of the destaticizing member (1, 1a, 1b, 1c, 1d, 1e) to the earth portion through the chain member (18).

18. The method for eliminating static electricity according to claim 16,
wherein:
swapping of the mounting positions between the fixing member (45) of the trough body (17) to the trough lid (19) and the destaticizing member (1, 1a, 1b, 1c, 1d, 1e) is possible.

19. The method for eliminating static electricity according to claim 16,
wherein:
determining a mounting distance between the destaticizing members of the structures according to one of claims 1 to 5 provided on the trough line according to claim one of claims 12 to 15 by finding the relationship between a walking distance of a worker and a charged voltage due to static induction repeatedly every time the worker walking on the trough line (40) and by calculating the assumption of the charged voltage corresponding to the worker's walking distance based on this result.

20. A destaticizing member (1, 1a, 1b, 1c, 1d, 1e) to be mounted onto a trough for laying cables, the trough comprising a trough body (17) and a through lid (19), wherein the destaticizing member (1, 1a, 1b, 1c, 1d, 1e) comprises:
a conductor member (15, 18); and
a metal-made conductive member (3) having a connection portion (11) with the conductor member (15, 18);
wherein the connection portion (11) is connected to one end of the conductor member (15, 18) and the other end of the conductor member (15, 18) is connectable to an earth portion;
wherein the metal-made conductive member (3) includes a top plate portion (5) and a pair of leg portions (7) to interpose and hold the trough body (17), the leg portions (7) being joined to both ends of the top plate portion (5), the metal-made conductive member (3) being formed by bending an elastic band-shaped metal piece (3);
and the top plate portion (5) of the metal-made conductive member (3) is disposed so as to cover an upper surface of the trough lid (19) in the width direction thereof;
wherein the leg portions (7), which are bent with a sharp angle to the top plate portion (5), can open to interpose and hold side faces of the trough body (17) so that pressing force can be applied to the side faces.

21. A destaticizing member (1, 1a, 1b, 1c, 1d, 1e) to be mounted onto a trough for laying cables, the trough comprising a trough body (17) and a through lid (19), wherein the destaticizing member (1, 1a, 1b, 1c, 1d, 1e) comprises;
a conductor member (15, 18); and
a metal-made conductive member (3) having a connection portion (11) with the conductor member (15, 18);
wherein the connection portion (11) is connected to one end of the conductor member (15, 18) and the other end of the conductor member (15, 18) is connectable to an earth portion;
wherein the metal-made conductive member (3) includes a top plate portion (5) and a pair of leg portions (7) to interpose and hold the trough body (17), the leg portions (7) being joined to both ends of the top plate portion (5) the metal-made conductive member (3) being formed by bending an elastic band-shaped metal piece (3) and the top plate portion (5) of the metal-made conductive member (3) is disposed so as to cover an upper surface of the trough lid (19) in the width direction thereof; and
fixing portions (9) bent inwardly and formed at both sides of the leg portions (7);
holes (37, 39) formed in the proximity of both ends of the top plate portion (5) and on the fixing portions (9) of both sides of the leg portions (7); and
wherein the hole (37) in the proximity of each end of the top plate portion (5) and the respective hole (39) of the fixing portion (9) on each side of the leg portion (7) are arranged in parallel so as to face with each other.

## Patentansprüche

1. Aufbau (30) umfassend:
eine Kabelrinne, wobei die Rinne einen Rinnenkörper (17) und einen aus Harz hergestellten Rinnendeckel (19), der über dem Rinnenkörper (17) angeordnet ist;
und ein Entstatisierungselement (1, 1a, 1b, 1c, 1d, 1e) umfassend ein Leiterelement (15, 18) und ein aus Metall hergestelltes leitendes Element (3) aufweisend einen Verbindungsabschnitt (11) zur Verbindung mit dem Leiterelement (15, 18), umfasst;
wobei ein erstes Ende des Leiterelements (15, 18) mit dem Verbindungsabschnitt (11) verbunden ist, und ein zweites Ende des Leiterelements (15, 18) mit einem Erdungsabschnitt verbunden werden kann;
wobei das aus Metall hergestellte leitende Element (3) einen oberen Plattenabschnitt (5) und ein Paar von Schenkelabschnitten (7), die mit beiden Enden des oberen Plattenabschnitts (5) verbunden sind, umfasst, wobei das aus Metall hergestellte leitende Element (3) durch Biegen eines elastischen, bandförmigen Metallstücks gebildet ist;
wobei der obere Plattenabschnitt (5) derart angeordnet ist, dass er eine obere Fläche des Rinnendeckels (19) in dessen Breitenrichtung überdeckt;
wobei sich das Paar der Schenkelabschnitte (7), die in einem spitzen Winkel zum oberen Plattenabschnitt (5) gebogen sind, öffnen und Seitenflächen des Rinnenkörpers (17) umgeben und festhalten kann, wobei Druckkräfte auf die Seitenflächen ausgeübt werden; und wobei das aus Metall hergestellte leitende Element (3) am Rinnenkörper (17) befestigt ist.

2. Aufbau nach Anspruch 1, wobei:
das aus Metall hergestellte leitende Element (3) durch Falten eines bandförmigen Metallstücks gebildet ist, um den oberen Plattenabschnitt (5) und die Schenkelabschnitte (7) in einem Körper zu bilden, und ein konvexer Abschnitt (31), der über die obere Fläche des Rinnendeckels (19) hinausragt in der Mitte des oberen Plattenabschnitts (5) gebildet ist, sodass ein Spalt (4) zwischen dem konvexen Abschnitt (31) und dem Rinnendeckel (19) geschaffen ist.

3. Aufbau nach Anspruch 1, wobei:
vorstehende Abschnitte, welche über einen Basisabschnitt hinausragen, an der oberen Fläche des Rinnendeckels (19) gebildet sind; und
der obere Plattenabschnitt (5) an einer oberen Fläche des Basisabschnitts des Rinnendeckels (19) angeordnet ist, und ferner zwischen oberen Flächen der vorstehenden Abschnitte und der oberen Fläche des Basisabschnitts positioniert ist.

4. Aufbau nach Anspruch 1, wobei:
ein Befestigungsabschnitt (9) zur Befestigung am Rinnenkörper (17) am Schenkelabschnitt (7) bereitgestellt ist;
der Befestigungsabschnitt (9) eine Verriegelungsklaue (10) aufweist, die an einem unteren Endabschnitt des Schenkelabschnitts (7) gebildet ist;
wobei die Verriegelungsklauen (10) Seitenflächen des Rinnenkörpers (17) umgeben und festhalten, sodass das aus Metall hergestellte leitende Element (3) am Rinnenkörper (17) befestigt ist.

5. Aufbau nach Anspruch 4, wobei:
das aus Metall hergestellte leitende Element (3) einen Aufbau als ein Befestigungselement (45) zum Befestigen des Rinnendeckels (19) am Rinnenkörper (17) umfasst, und das Entstatisierungselement (1, 1a, 1b, 1c, 1d, 1e) in derselben Position wie die Befestigungsposition des Rinnendeckels (19) am Rinnenkörper (17) angebracht sein kann.

6. Aufbau nach Anspruch 1, wobei:
ein Bolzen (11) am Schenkelabschnitt (7) des aus Metall hergestellten leitenden Elements (3) angeschweißt ist, und ein Ende des Leiterelements (15, 18) mit dem Bolzen (11) verbunden und durch eine Mutter (13) daran befestigt ist, während das andere Ende des Leiterelements (15, 18) mit dem Erdungsabschnitt verbunden ist.

7. Aufbau nach Anspruch 1, wobei:
das Leiterelement (15, 18) ein Leitungsdraht (15) oder ein Kettenglied (18) ist; und
das Entstatisierungselement (1, 1a, 1b, 1c, 1d, 1e) den Rinnendeckel (19) am Rinnenkörper (17) befestigt.

8. Aufbau nach Anspruch 7, wobei:
das leitende Element ein Leitungsdraht (15) ist; und
ein Ende des Leitungsdrahts (15) mit einer elastischen Klemme (12) verbunden ist, welche einen Teil des Schenkelabschnitts (7) umgibt und festhält, während das andere Ende des Leitungsdrahts (15) mit dem Erdungsabschnitt verbunden ist.

9. Aufbau nach Anspruch 7, wobei:
das leitende Element ein Leitungsdraht (15) ist; und
ein Ende des Leitungsdrahts (15) mit einem Stecker (16) verbunden ist, der am Schenkelabschnitt (7) befestigt ist, während das andere Ende des Leitungsdrahts (15) mit dem Erdungsabschnitt verbunden ist.

10. Aufbau nach Anspruch 7, wobei:
der Erdungsabschnitt entweder ein Betonverankerungsbolzen (35), ein Metallaufbau oder unter der Erde ist, und der Schenkelabschnitt (7) und der Erdungsabschnitt durch das Leiterelement (15, 18) elektrisch miteinander verbunden sind.

11. Rinnenreihe (40), die durch Verbinden einer Mehrzahl von Aufbauten gemäß einem der Ansprüche 1 bis 10 gebildet ist.

12. Rinnenreihe (40) nach Anspruch 11, wobei:
die Rinnenreihe (40) durch Verbinden der Rinnenkörper (17) der Aufbauten nach einem der Ansprüche 1 bis 5 sowie durch Verbinden der Rinnendeckel (19) der Aufbauten nach einem der Ansprüche 1 bis 5 gebildet ist;
wobei der Rinnendeckel (19) jedes der Aufbauten nach einem der Ansprüche 1 bis 5 einen unteren dünnschichtigen Abschnitt (27) an einem Ende der Längsrichtung desselben, und einen oberen dünnschichten Abschnitt (29) am anderen Ende umfasst;
sich für die benachbarten Rinnendeckel (19) der obere dünnschichtige Abschnitt (29) eines ersten Rinnendeckels (19) mit dem unteren dünnschichtigen Abschnitt (27) eines zweiten Rinnendeckels (19) überlappt;
für die benachbarten Rinnendeckel (19) ein jeweiliges Entstatisierungselement (1, 1a, 1b, 1c, 1d, 1e) der Aufbauten nach einem der Ansprüche 1 bis 5 an der Überlappungsposition der oberen dünnschichtigen Abschnitte (29) und der unteren dünnschichtigen Abschnitte (27) oder in der Nähe des oberen dünnschichtigen Abschnitts (29) angeordnet ist, um den ersten Rinnendeckel (19) und den zweiten Rinnendeckel (19) entsprechend benachbarter Rinnendeckel (19) aneinander zu befestigen.

13. Rinnenreihe (40) nach Anspruch 11, wobei:
ein Befestigungselement (45), das nur aus dem aus Metall hergestellten leitenden Element (3) gebildet ist, dazu verwendet ist, den Rinnendeckel (19) an einer Befestigungsposition des Rinnenkörpers (17) und des Rinnendeckels (19) am Rinnenkörper (17) zu befestigen, wobei die Befestigungsposition eine andere Position als die mit dem Entstatisierungselement (1, 1a, 1b, 1c, 1d, 1e) versehene Position ist.

14. Rinnenreihe (40) nach Anspruch 11, wobei:
die Entstatisierungselemente (1, 1a, 1b, 1c, 1d, 1e) der Aufbauten nach einem der Ansprüche 1 bis 5 in Abständen von 100 m oder weniger an der aus Harz hergestellten Rinnenreihe (40) bereitgestellt sind, sodass die Rinnenreihe (40) dafür ausgelegt ist, statische Elektrizität, die sich aufgrund der statischen Aufladung auf den Arbeiter entlädt, jedes Mal zu beseitigen, wenn der an der Rinnenreihe (40) arbeitende Arbeiter auf einen oberen Plattenabschnitt (5) eines betreffenden der Entstatisierungselemente (1, 1a, 1b, 1c, 1d, 1e) tritt.

15. Rinnenreihe (40) nach Anspruch 14, wobei:
ein Befestigungsabstand zwischen den Entstatisierungselementen (1, 1a, 1b, 1c, 1d, 1e), die an der Rinnenreihe (40) bereitgestellt sind, entweder den Positionen, die in jeweils frei gewählten Abständen eines ganzzahligen Vielfachen der Länge des Rinnenkörpers (17), oder den Positionen, die abseits der Positionen, die in jeweils frei gewählten Abständen eines ganzzahligen Vielfachen der Länge des Rinnenkörpers (17) für den Abstand zwischen den Befestigungspositionen des Rinnendeckels (19) angeordnet sind, entspricht.

16. Verfahren zum Beseitigen statischer Elektrizität unter Verwendung des Aufbaus nach einem der Ansprüche 7 bis 10, umfassend:
Entladen der durch den oberen Plattenabschnitt (5) angesammelten statischen Elektrizität des Entstatisierungselements (1, 1a, 1b, 1c, 1d, 1e) zum Erdungsabschnitt durch den Leitungsdraht (15) oder das Kettelglied (18).

17. Verfahren zum Beseitigen statischer Elektrizität nach Anspruch 16, wobei:
das Leiterelement (15, 18) ein Kettenglied (18) ist; und
das Entladen die durch den oberen Plattenabschnitt (5) angesammelte statische Elektrizität des Entstatisierungselements (1, 1a, 1b, 1c, 1d, 1e) durch das Kettenglied (18) zum Erdungsabschnitt entlädt.

18. Verfahren zum Beseitigen statischer Elektrizität nach Anspruch 16, wobei:
des Austauschen der Befestigungspositionen zwischen dem Befestigungselement (45) des Rinnenkörpers (17) am Rinnendeckel (19) und am Entstatisierungselement (1, 1a, 1b, 1c, 1d, 1e) möglich ist.

19. Verfahren zum Beseitigen statischer Elektrizität nach Anspruch 16, wobei:
das Bestimmen eines Befestigungsabstands zwischen den Entstatisierungselementen der Aufbauten nach einem der Ansprüche 1 bis 5, die an der Rinnenreihe nach einem der Ansprüche 12 bis 15 bereitgestellt sind, durch Finden der Beziehung zwischen einem gehend zurückgelegten Weg eines Arbeiters und einer durch die statische Aufladung wiederholt geladenen Spannung jedes Mal, wenn der Arbeiter auf der Rinnenreihe (40) geht, und durch Berechnen der Annahme der geladenen Spannung, welche dem gehend zurückgelegten Weg des Arbeiters entspricht, basierend auf diesem Ergebnis, erfolgt.

20. Entstatisierungselement (1, 1a, 1b, 1c, 1d, 1e) zum Anbringen an einer Kabelrinne, die Rinne umfassend einen Rinnenkörper (17) und einen Rinnendeckel (19), wobei das Entstatisierungselement (1, 1a, 1b, 1c, 1d, 1e) umfasst:
ein Leiterelement (15, 18); und
ein aus Metall hergestelltes leitendes Element (3) aufweisend einen Verbindungsabschnitt (11) mit dem Leiterelement (15, 18);
wobei der Verbindungsabschnitt (11) mit einem Ende des Leiterelements (15, 18) verbunden ist, und das andere Ende des Leiterelements (15, 18) mit einem Erdungsabschnitt verbunden werden kann;
wobei das aus Metall hergestellte leitende Element (3) einen oberen Plattenabschnitt (5) und ein Paar von Schenkelabschnitten (7) zum Umgeben und Festhalten des Rinnenkörpers (17) aufweist, wobei die Schenkelabschnitte (7) mit beiden Enden des oberen Plattenabschnitts (5) verbunden sind, und das aus Metall hergestellte leitende Element (3) durch Biegen eines elastischen, bandförmigen Metallstücks (3) gebildet ist;
und der obere Plattenabschnitt (5) des aus Metall hergestellten leitenden Elements (3) derart angeordnet ist, dass er eine obere Fläche des Rinnendeckels (19) in dessen Breitenrichtung überdeckt;
wobei sich die Schenkelabschnitte (7), die in einem spitzen Winkel zum oberen Plattenabschnitt (5) gebogen sind, öffnen können, um Seitenflächen des Rinnenkörpers (17) zu umgeben und festzuhalten, sodass Druckkräfte auf die Seitenflächen ausgeübt werden können.

21. Entstatisierungselement (1, 1a, 1b, 1c, 1d, 1e) zum Anbringen an einer Kabelrinne, die Rinne umfassend einen Rinnenkörper (17) und einen Rinnendeckel (19), wobei das Entstatisierungselement (1, 1a, 1b, 1c, 1d, 1e) umfasst:
ein Leiterelement (15, 18); und
ein aus Metall hergestelltes leitendes Element (3) aufweisend einen Verbindungsabschnitt (11) mit dem Leiterelement (15, 18);
wobei der Verbindungsabschnitt (11) mit einem Ende des Leiterelements (15, 18) verbunden ist, und das andere Ende des Leiterelements (15, 18) mit einem Erdungsabschnitt verbunden werden kann;
wobei das aus Metall hergestellte leitende Element (3) einen oberen Plattenabschnitt (5) und ein Paar von Schenkelabschnitten (7) zum Umgeben und Festhalten des Rinnenkörpers (17) aufweist, wobei die Schenkelabschnitte (7) mit beiden Enden des oberen Plattenabschnitts (5) verbunden sind, und das aus Metall hergestellte leitende Element (3) durch Biegen eines elastischen, bandförmigen Metallstücks (3) gebildet ist, und der obere Plattenabschnitt (5) des aus Metall hergestellten leitenden Elements (3) derart angeordnet ist, dass er eine obere Fläche des Rinnendeckels (19) in der Breitenrichtung desselben überdeckt; und
Befestigungsabschnitte (9) an beiden Seiten der Schenkelabschnitte (7) nach innen gebogen und gebildet sind;
Löcher (37, 39) in der Nähe beider Enden des oberen Plattenabschnitts (5) und an den Befestigungsabschnitten (9) beider Seiten der Schenkelabschnitte (7) gebildet sind; und
wobei das Loch (37) in der Nähe jedes der Enden des oberen Plattenabschnitts (5) und das entsprechende Loch (39) des Befestigungsabschnitts (9) an jeder der Seiten des Schenkelabschnitts (7) parallel zueinander ausgerichtet sind, um einander gegenüberzustehen.

## Revendications

1. Structure (30) comprenant :
une goulotte pour la pose de câbles, la goulotte comprenant un corps de goulotte (17) et un couvercle de goulotte en résine (19) qui est disposé au-dessus du corps de goulotte (17) ;
et un élément d'élimination d'électricité statique (1, 1a, 1b, 1c, 1d, 1e) comprenant un élément conducteur (15, 18) et un élément conductif en métal (3) comprenant une portion de connexion (11) à connecter avec l'élément conducteur (15, 18) ;
une première extrémité de l'élément conducteur (15, 18) étant connectée à la portion de connexion (11) et une deuxième extrémité de l'élément conducteur (15, 18) pouvant être connectée à une portion de mise à la terre ;
l'élément conductif en métal (3) comprenant une portion de plaque supérieure (5) et une paire de portions de montants (7) qui sont connectés aux deux extrémités de la portion de plaque supérieure (5), l'élément conductif en métal (3) étant formé en pliant une pièce de métal élastique en forme de bande ;
la portion de plaque supérieure (5) étant disposée de façon à recouvrir une surface supérieure du couvercle de goulotte (19) dans la direction de la largeur de celle-ci ;
la paire de portions de montants (7), qui sont pliées avec un angle aigu par rapport à la portion de plaque supérieure (5), permet d'ouvrir et d'intercaler et de maintenir les faces latérales du corps de goulotte (17), des forces de pression étant appliquées aux faces latérales ;
et l'élément conductif en métal (3) étant fixé au corps de goulotte (17).

2. Structure selon la revendication 1, dans laquelle :
l'élément conductif en métal (3) est formé en pliant une pièce de métal en forme de bande de façon à former la portion de plaque supérieure (5) et les portions de montants (7) dans un corps, et une portion convexe (31) dépassant au-dessus de la surface supérieure du couvercle de goulotte (19) est formée au centre de la portion de plaque supérieure (5) de façon à ce qu'un interstice (4) soit créé entre la portion convexe (31) et le couvercle de goulotte (19).

3. Structure selon la revendication 1, dans laquelle :
des portions en saillie qui dépassent au-dessus d'une portion de base sont formées sur la surface supérieure du couvercle de goulotte (19) ; et
la portion de plaque supérieure (5) est disposée sur une surface supérieure de la portion de base du couvercle de goulotte (19) et est, en outre, positionnée entre les surfaces supérieures des portions en saillie et la surface supérieure de la portion de base.

4. Structure selon la revendication 1, dans laquelle :
une portion de fixation (9) à fixer au corps de goulotte (17) est prévue sur la portion de montant (7) ;
la portion de fixation (9) comprend une griffe de verrouillage (10) qui est formée au niveau d'une portion d'extrémité inférieure de la portion de montant (7) ;
les griffes de verrouillage (10) s'intercalent et maintiennent les faces latérales du corps de goulotte (17) de façon à ce que l'élément conductif en métal (3) soit fixé au corps de goulotte (17).

5. Structure selon la revendication 4, dans laquelle :
l'élément conductif en métal (3) comprend une structure en tant qu'élément de fixation (45) pour la fixation du couvercle de goulotte (19) au corps de goulotte (17) et l'élément d'élimination d'électricité statique (1, 1a, 1b, 1c, 1d, 1e) peut être monté à la même position que la position de fixation du couvercle de goulotte (19) au corps de goulotte (17).

6. Structure selon la revendication 1, dans laquelle :
un boulon (11) est soudé à la portion de montant (7) de l'élément conductif en métal (3) et une extrémité de l'élément conducteur (15, 18) est connectée et fixée au boulon (11) par un écrou (13) tandis que l'autre extrémité de l'élément conducteur (15, 18) est connectée à la portion de mise à la terre.

7. Structure selon la revendication 1, dans laquelle :
l'élément conducteur (15, 18) est un fil conducteur (15) ou un élément de chaîne (18) ; et
l'élément d'élimination d'électricité statique (1, 1a, 1b, 1c, 1d, 1e) fixe le couvercle de goulotte (19) au corps de goulotte (17).

8. Structure selon la revendication 7, dans laquelle :
l'élément conductif est un fil conducteur (15) ; et
une extrémité du fil conducteur (15) est connectée à un clip élastique (12) qui s'intercale et maintient une partie de la portion de montant (7) tandis que l'autre extrémité du fil conducteur (15) est connectée à la portion de mise à la terre.

9. Structure selon la revendication 7, dans laquelle :
l'élément conductif est un fil conducteur (15) ; et
une extrémité du fil conducteur (15) est connectée à un connecteur (16) qui est fixé à la portion de montant (7) tandis que l'autre extrémité du fil conducteur (15) est connectée à la portion de mise à la terre.

10. Structure selon la revendication 7, dans laquelle :
la portion de mise à la terre est soit un boulon d'ancrage au béton (35), une structure métallique ou le sous-sol, et la portion de montant (7) et la portion de mise à la terre sont connectées électriquement par l'élément conducteur (15, 18).

11. Ligne de goulotte (40) qui est formée en assemblant une pluralité de structures selon l'une des revendications 1 à 10.

12. Ligne de goulotte (40) selon la revendication 11, dans laquelle :
la ligne de goulotte (40) est formée en assemblant les corps de goulottes (17) des structures selon l'une des revendications 1 à 5 ensemble ainsi qu'en assemblant les couvercles de goulottes (19) des structures selon l'une des revendications 1 à 5 ensemble ;
le couvercle de goulotte (19) de chacune des structures selon l'une des revendications 1 à 5 comprenant une portion à couche mince inférieure (27) à une extrémité d'une direction longitudinale de celui-ci et une portion à couche mince supérieure (29) à l'autre extrémité ;
pour les couvercles de goulottes (19) adjacents, la portion à couche mince supérieure (29) d'un premier couvercle de goulotte (19) se superpose avec la portion à couche mince inférieure (27) d'un deuxième couvercle de goulotte (19) ;
pour les couvercles de goulottes (19) adjacents, un élément d'élimination d'électricité statique (1, 1a, 1b, 1c, 1d, 1e) respectif des structures selon l'une des revendications 1 à 5 est disposé sur la position de superposition des portions à couches minces supérieures (29) et des portions à couches minces inférieures (27), ou à proximité de la portion à couche mince supérieure (29), de façon à fixer le premier couvercle de goulotte (19) et le deuxième couvercle de goulotte (19) des couvercles de goulottes (19) adjacents respectifs ensemble.

13. Ligne de goulotte (40) selon la revendication 11, dans laquelle :
un élément de fixation (45), qui est formé uniquement à partir de l'élément conductif en métal (3), est utilisé pour fixer le couvercle de goulotte (19) au corps de goulotte (17) au niveau d'une position de fixation du corps de goulotte (17) et du couvercle de goulotte (19), la position de fixation étant une position différente de la position prévue avec l'élément d'élimination d'électricité statique (1, 1a, 1b, 1c, 1d, 1e).

14. Ligne de goulotte (40) selon la revendication 11, dans laquelle :
les éléments d'élimination d'électricité statique (1, 1a, 1b, 1c, 1d, 1e) desdites structures selon l'une des revendications 1 à 5 sont prévus à des intervalles de 100 m ou moins sur la ligne de goulotte en résine (40), de façon à ce que la ligne de goulotte (40) soit conçue pour éliminer l'électricité statique accumulée sur l'opérateur du fait d'une induction statique répétée à chaque fois que l'opérateur marchant sur la ligne de goulotte (40) marche sur une portion de plaque supérieure (5) d'un des éléments d'élimination d'électricité statique (1, 1a, 1b, 1c, 1d, 1e) respectifs.

15. Ligne de goulotte (40) selon la revendication 14, dans laquelle :
une distance de montage entre les éléments d'élimination d'électricité statique (1, 1a, 1b, 1c, 1d, 1e) prévus sur la ligne de goulotte (40) est équivalente soit à des positions auxquelles chacun d'eux est séparé des autres avec des intervalles sélectionnés librement d'un multiple entier de la longueur du corps de goulotte (17) ou à des positions qui sont loin des positions auxquelles chacun d'eux est séparé des autres avec des intervalles sélectionnés librement d'un multiple entier de la longueur du corps de goulotte (17) pour la distance entre les positions de fixation du couvercle de goulotte (19).

16. Procédé d'élimination d'électricité statique utilisant la structure selon l'une des revendications 7 à 10, comprenant :
la décharge de l'électricité statique collectée par la portion de plaque supérieure (5) de l'élément d'élimination d'électricité statique (1, 1a, 1b, 1c, 1d, 1e) vers la portion de mise à la terre par l'intermédiaire du fil conducteur (15) ou l'élément de chaîne (18).

17. Procédé d'élimination d'électricité statique selon la revendication 16, dans laquelle :
l'élément conducteur (15, 18) est un élément de chaîne (18) ; et
ladite décharge permet de décharger l'électricité statique collectée par la portion de plaque supérieure (5) de l'élément d'élimination d'électricité statique (1, 1a, 1b, 1c, 1d, 1e) vers la portion de mise à la terre par l'intermédiaire de l'élément de chaîne (18).

18. Procédé d'élimination d'électricité statique selon la revendication 16, dans laquelle :
la permutation des positions de montage entre l'élément de fixation (45) du corps de goulotte (17) au couvercle de goulotte (19) et l'élément d'élimination d'électricité statique (1, 1a, 1b, 1c, 1d, 1e) est possible.

19. Procédé d'élimination d'électricité statique selon la revendication 16, dans laquelle :
la détermination d'une distance de montage entre les éléments d'élimination d'électricité statique des structures selon l'une des revendications 1 à 5 prévus sur la ligne de goulotte selon l'une des revendications 12 à 15 s'effectue en trouvant la relation entre une distance de marche d'un opérateur et une tension chargée du fait de l'induction statique répétée à chaque fois que l'opérateur marche sur la ligne de goulotte (40) et en calculant l'estimation de la tension chargée correspondant à la distance de marche de l'opérateur sur la base de ce résultat.

20. Élément d'élimination d'électricité statique (1, 1a, 1b, 1c, 1d, 1e) destiné à être monté sur une goulotte pour la pose de câbles, la goulotte comprenant un corps de goulotte (17) et un couvercle de goulotte (19), l'élément d'élimination d'électricité statique (1, 1a, 1b, 1c, 1d, 1e) comprenant :
un élément conducteur (15, 18) ; et
un élément conductif en métal (3) comprenant une portion de connexion (11) à connecter avec l'élément conducteur (15, 18) ;
la portion de connexion (11) étant connectée à une extrémité de l'élément conducteur (15, 18) et l'autre extrémité de l'élément conducteur (15, 18) pouvant être connectée à une portion de mise à la terre ;
l'élément conductif en métal (3) comprenant une portion de plaque supérieure (5) et une paire de portions de montants (7) pour intercaler et maintenir le corps de goulotte (17), les portions de montants (7) étant assemblées aux deux extrémités de la portion de plaque supérieure (5), l'élément conductif en métal (3) étant formé en pliant une pièce en métal élastique en forme de bande (3) ;
et la portion de plaque supérieure (5) de l'élément conductif en métal (3) est disposée de façon à recouvrir une surface supérieure du couvercle de goulotte (19) dans la direction de la largeur de celui-ci ;
les portions de montants (7), qui sont pliées à un angle aigu par rapport à la portion de plaque supérieure (5), peuvent ouvrir pour intercaler et maintenir les faces latérales du corps de goulotte (17) de façon à ce qu'une force de pression puisse être appliquée aux faces latérales.

21. Élément d'élimination d'électricité statique (1, 1a, 1b, 1c, 1d, 1e) destiné à être monté sur une goulotte pour la pose de câbles, la goulotte comprenant un corps de goulotte (17) et un couvercle de goulotte (19), l'élément d'élimination d'électricité statique (1, 1a, 1b, 1c, 1d, 1e) comprenant :
un élément conducteur (15, 18) ; et
un élément conductif en métal (3) comprenant une portion de connexion (11) à connecter avec l'élément conducteur (15, 18) ;
la portion de connexion (11) étant connectée à une extrémité de l'élément conducteur (15, 18) et l'autre extrémité de l'élément conducteur (15, 18) pouvant être connectée à une portion de mise à la terre ;
l'élément conductif en métal (3) comprenant une portion de plaque supérieure (5) et une paire de portions de montants (7) pour intercaler et maintenir le corps de goulotte (17), les portions de montants (7) étant assemblées aux deux extrémités de la portion de plaque supérieure (5), l'élément conductif en métal (3) étant formé en pliant une pièce en métal élastique en forme de bande (3) ;
et la portion de plaque supérieure (5) de l'élément conductif en métal (3) est disposée de façon à recouvrir une surface supérieure du couvercle de goulotte (19) dans la direction de la largeur de celui-ci ; et
des portions de fixation (9) pliées vers l'intérieur et formée au niveau des deux côtés des portions de montants (7) ;
des trous (37, 39) réalisés à proximité des deux extrémités de la portion de plaque supérieure (5) et sur les portions de fixation (9) des deux côtés des portions de montants (7) ; et
le trou (37) à proximité de chaque extrémité de la portion de plaque supérieure (5) et le trou (39) correspondant sur la portion de fixation (9) de chaque côté de la portion de montant (7) sont disposés parallèlement de façon à se faire face.
